# FASCICULE DE BREVET EUROPEEN

(11) **EP 2 636 786 B1**
(45) Date de publication et mention de la délivrance du brevet: **12.08.2015**
(21) Numéro de dépôt: 13157908.8
(22) Date de dépôt: 05.03.2013
(51) Int. Cl.: D06F 39/08, A47L 15/42

(54) **Vanne multivoies et machine à laver comprenant une telle vanne multivoies**
Mehrwegventil und Waschmaschine, die ein solches Mehrwegventil umfasst
Multi-channel valve and washing machine comprising such a multi-channel valve

(30) Priorité: 06.03.2012 FR 1200673
(43) Date de publication de la demande: 11.09.2013
(73) Titulaire: Groupe Brandt, 92500 Rueil-Malmaison (FR)
(72) Inventeur: Nguyen, Minh Man, 69008 Lyon (FR); Rodriguez, Pascal, 69369 Millery (FR)

(56) Documents cités:
- EP-A1- 2 312 042
- US-A1- 2012 048 313

## Description

La présente invention concerne une vanne multivoies.

Elle concerne également une machine à laver comprenant un réservoir d'eau et une vanne multivoies, et en particulier une machine à laver le linge ou une machine à laver la vaisselle.

De manière générale, la présente invention concerne les machines à laver comprenant un réservoir d'eau pouvant permettre l'utilisation d'eau de lavage et/ou de rinçage au cours d'une phase suivante d'un cycle de fonctionnement ou lors d'un cycle de fonctionnement suivant.

Plus particulièrement, la présente invention trouve son application dans les machines à laver domestiques, et en particulier dans les machines à laver le linge et les machines à laver la vaisselle.

On connaît déjà des machines à laver comprenant une cuve de lavage, un réservoir d'eau de lavage et/ou de rinçage, et un circuit hydraulique de distribution d'eau. Le circuit hydraulique de distribution d'eau relie la cuve de lavage au réservoir d'eau au moyen de conduites de circulation d'eau souples.

Cependant, ces machines à laver présentent l'inconvénient que les conduites de circulation d'eau souples reliant la cuve de lavage au réservoir d'eau sont connectées au moyen de plusieurs vannes.

Par conséquent, ces vannes augmentent le coût d'obtention des machines à laver et occupent un encombrement important.

Ainsi, l'encombrement occupé par les vannes engendre une réduction de la capacité de stockage d'eau de lavage et/ou de rinçage du réservoir d'eau, et, dans le cas d'une machine à laver le linge, un positionnement adapté pour éviter des collisions avec la cuve de lavage suspendue se déplaçant au cours d'un cycle de fonctionnement.

On connaît également le document EP 2 312 042 A1 qui décrit une vanne multivoies comprenant un corps, le corps comprenant des parois de canalisation de flux d'eau de sorte à former des chambres à l'intérieur du corps. La vanne multivoies comprend des ouvertures de passage d'eau de sorte à permettre un écoulement d'eau depuis l'extérieur vers l'intérieur du corps, et inversement. La vanne multivoies comprend des passages d'écoulement d'eau ménagés à l'intérieur du corps de sorte à permettre un écoulement d'eau entre les chambres du corps. Et la vanne multivoies comprend des clapets obturant ou dégageant les passages d'écoulement d'eau de sorte à orienter des flux d'eau à l'intérieur du corps.

Cependant, cette vanne multivoies présente l'inconvénient de ménager directement les passages d'écoulement d'eau à l'intérieur des parois de canalisation de flux d'eau.

Une telle vanne multivoies peut être réalisée selon un principe de moulage de pièces en matière plastique dit de cale montante permettant de réaliser une ouverture sur une paroi et dans une direction perpendiculaire à la direction de moulage.

Cependant, ce principe de moulage dit de cale montante permettant de réaliser des pièces en matière plastique présente l'inconvénient d'être onéreux, de fragiliser le moule d'obtention de ces pièces en matière plastique.

En outre, ce principe de moulage dit de cale montante ne peut pas être mis en oeuvre lorsque les dimensions des pièces en matière plastique ou des outils à réaliser sont de taille petite, et/ou lorsque le nombre d'ouvertures à obtenir est trop important et/ou dans une pluralité de directions différentes.

La pluralité de dispositifs dits de cale montante nécessaire à l'obtention d'une telle vanne multivoies est donc complexe et coûteuse.

En outre, une vanne multivoies comprenant des passages d'écoulement d'eau ménagés directement à l'intérieur des parois de canalisation de flux d'eau engendre des difficultés techniques en termes de fiabilité et de robustesse de l'outil de fabrication de celle-ci.

Par ailleurs, une vanne multivoies comprenant des passages d'écoulement d'eau ménagés directement à l'intérieur des parois de canalisation de flux d'eau engendre également des difficultés pour garantir l'étanchéité de chacune des chambres formées à l'intérieur du corps de la vanne multivoies lors de l'obturation des passages d'écoulement d'eau par des clapets.

La présente invention a pour but de résoudre les inconvénients précités et de proposer une vanne multivoies, ainsi qu'une machine à laver comprenant une telle vanne multivoies, permettant de minimiser l'encombrement de celle-ci au moindre coût, de garantir l'étanchéité entre les chambres ménagées à l'intérieur de celle-ci, et de faciliter l'obtention de celle-ci en simplifiant l'outil de fabrication de ladite vanne multivoies de sorte à garantir sa fiabilité et sa robustesse.

A cet égard, la présente invention vise, selon un premier aspect, une vanne multivoies comprenant :
- un corps, ledit corps comprenant des parois de canalisation de flux d'eau de sorte à former des chambres à l'intérieur dudit corps ;
- des ouvertures de passage d'eau de sorte à permettre un écoulement d'eau depuis l'extérieur vers l'intérieur dudit corps, et inversement ;
- des passages d'écoulement d'eau ménagés à l'intérieur dudit corps de sorte à permettre un écoulement d'eau entre lesdites chambres dudit corps ; et
- des clapets obturant ou dégageant lesdits passages d'écoulement d'eau de sorte à orienter des flux d'eau à l'intérieur dudit corps.

Selon l'invention, au moins l'une desdites parois de canalisation de flux d'eau dudit corps comprend une ouverture à l'intérieur de laquelle est disposé un insert, où ledit au moins un insert comporte l'un desdits passages d'écoulement d'eau.

Ainsi, la disposition d'un insert dans une ouverture d'au moins l'une des parois de canalisation de flux d'eau du corps de la vanne multivoies permet de réaliser une vanne multivoies avec au moins un passage d'écoulement d'eau au travers d'un insert de sorte à minimiser l'encombrement de la vanne multivoies, réduire le coût d'obtention de la vanne multivoies et de faciliter l'obtention de celle-ci en simplifiant l'outil de fabrication de celle-ci de sorte à garantir sa fiabilité et sa robustesse.

Une telle vanne multivoies comportant des passages d'écoulement d'eau ménagés à l'intérieur du corps de la vanne ne peut pas être obtenue directement par moulage puisque celle-ci présente des dimensions réduites et une multiplicité de passages d'écoulement d'eau, lorsque celle-ci est réalisée en matière plastique.

Par conséquent, les passages d'écoulement d'eau ménagés à l'intérieur du corps de la vanne sont réalisés en ajoutant un ou plusieurs inserts dans des parois de canalisation de flux d'eau du corps de la vanne multivoies.

Une vanne multivoies conforme à l'invention permet de ménager une pluralité de passages d'écoulement d'eau à l'intérieur du corps de la vanne et pouvant être orientés dans des directions distinctes.

En outre, la disposition d'un insert dans une ouverture d'au moins l'une des parois de canalisation de flux d'eau du corps de la vanne multivoies permet de garantir l'étanchéité lors de l'obturation d'un passage d'écoulement d'eau ménagé dans l'insert par un clapet.

Selon une caractéristique préférée de l'invention, lesdits clapets comportent respectivement au moins un joint d'étanchéité, où un joint d'étanchéité de l'un desdits clapets coopère avec ledit insert d'au moins l'une desdites parois de canalisation de flux d'eau de sorte à obturer le passage d'écoulement d'eau ménagé dans ledit insert.

Ainsi, le joint d'étanchéité d'un clapet permet de garantir l'étanchéité lors de la mise en appui d'un clapet avec un insert d'une paroi de canalisation de flux d'eau du corps de la vanne multivoies.

Préférentiellement, ledit joint d'étanchéité entoure une section supérieure à la section dudit passage d'écoulement d'eau à obturer, ledit passage d'écoulement d'eau étant ménagé dans ledit insert de ladite paroi de canalisation de flux d'eau.

Ainsi, le joint d'étanchéité d'un clapet permet de garantir l'étanchéité en recouvrant un insert d'une paroi de canalisation de flux d'eau au-delà du passage d'écoulement d'eau ménagé dans l'insert.

Selon une autre caractéristique préférée de l'invention, ledit au moins un insert comporte une paroi dans laquelle est ménagé l'un desdits passages d'écoulement d'eau, où ladite paroi présente un renflement s'étendant respectivement le long d'un premier bord et d'un deuxième bord de ladite paroi, ledit premier bord étant opposé audit deuxième bord de ladite paroi, et où ledit renflement desdits premier et deuxième bords de ladite paroi coopère avec une rainure de ladite ouverture ménagée dans l'une desdites parois de canalisation de flux d'eau.

Ainsi, le positionnement du renflement des premier et deuxième bords de la paroi de l'insert à l'intérieur d'une rainure de l'ouverture ménagée dans l'une des parois de canalisation de flux d'eau permet de garantir l'étanchéité entre l'insert et la paroi de canalisation de flux d'eau.

Préférentiellement, le renflement desdits premier et deuxième bords de ladite paroi étant de forme cylindrique présente un diamètre supérieur par rapport à la largeur de ladite rainure de ladite ouverture ménagée dans l'une desdites parois de canalisation de flux d'eau.

Ainsi, l'étanchéité entre l'insert et la paroi de canalisation de flux d'eau est garantie par un ajustement serré.

Avantageusement, la hauteur dudit au moins un insert est déterminée en fonction de ladite ouverture ménagée dans l'une desdites parois de canalisation de flux d'eau de sorte à aligner un bord supérieur dudit au moins un insert avec un bord supérieur de ladite paroi de canalisation de flux d'eau.

Ainsi, suite au positionnement d'un insert à l'intérieur d'une ouverture ménagée dans l'une des parois de canalisation de flux d'eau, le bord supérieur de l'insert et le bord supérieur de la paroi de canalisation de flux d'eau sont alignés.

De cette manière, il est possible de contrôler la conformité de l'assemblage de l'insert sur le corps de la vanne multivoies et de garantir l'étanchéité de la vanne multivoies.

Préférentiellement, ladite vanne comprend également un couvercle, où un joint d'étanchéité est disposé sur ledit bord supérieur desdites parois de canalisation de flux d'eau dudit corps et sur ledit bord supérieur dudit au moins un insert, et où ledit joint d'étanchéité est maintenu en position par la fixation dudit couvercle sur ledit corps au moyen d'éléments de fixation.

Ainsi, la compression d'un joint d'étanchéité entre le bord supérieur des parois de canalisation de flux d'eau du corps de la vanne multivoies, le bord supérieur dudit au moins un insert et le couvercle de la vanne multivoies permet de garantir l'étanchéité entre les chambres de la vanne multivoies formées par les parois de canalisation de flux d'eau et le ou les inserts.

La présente invention vise, selon un deuxième aspect, une machine à laver, en particulier une machine à laver le linge ou une machine à laver la vaisselle, comprenant un réservoir d'eau et une vanne multivoies conforme à l'invention.

Cette machine à laver présente des caractéristiques et avantages analogues à ceux décrits précédemment en relation avec la vanne multivoies selon l'invention.

En particulier, la vanne multivoies permet de raccorder l'ensemble des conduites de circulation d'eau reliant une cuve de lavage et un réservoir d'eau d'une machine à laver.

Ainsi, cette vanne multivoies permet de réduire le coût d'obtention de ces machines à laver et de réduire l'encombrement occupé par celle-ci.

De cette manière, la réduction de l'encombrement occupé par la vanne multivoies permet de pouvoir augmenter la capacité de stockage d'eau du réservoir d'eau, et, dans le cas d'une machine à laver le linge, de limiter les contraintes liées au risque de collisions avec la cuve de lavage suspendue se déplaçant au cours d'un cycle de fonctionnement.

D'autres particularités et avantages de l'invention apparaîtront encore dans la description ci-après.

Aux dessins annexés, donnés à titre d'exemples non limitatifs :
- la figure 1 est une vue schématique en coupe d'une machine à laver, en particulier d'une machine à laver le linge à chargement du linge par le dessus, comprenant un réservoir d'eau de lavage et/ou de rinçage selon un mode de réalisation de l'invention ;
- la figure 2 est une vue schématique des deux parois en forme de coque d'un réservoir d'eau de lavage et/ou de rinçage conforme à un mode de réalisation de l'invention, où est représenté le trajet de l'eau de lavage et/ou de rinçage dans ledit réservoir d'eau lors de la vidange de l'eau de lavage et/ou de rinçage de la cuve de lavage de la machine à laver vers un réseau d'eau usée externe ;
- la figure 3 est une vue schématique des deux parois en forme de coque d'un réservoir d'eau de lavage et/ou de rinçage conforme à un mode de réalisation de l'invention, où est représenté le trajet de l'eau de lavage et/ou de rinçage dans ledit réservoir d'eau lors de la vidange de l'eau de lavage et/ou de rinçage du réservoir d'eau vers un réseau d'eau usée externe ;
- la figure 4 est une vue schématique des deux parois en forme de coque d'un réservoir d'eau de lavage et/ou de rinçage conforme à un mode de réalisation de l'invention, où est représenté le trajet de l'eau de lavage et/ou de rinçage dans ledit réservoir d'eau lors de la vidange de l'eau de lavage et/ou de rinçage de la cuve de lavage de la machine à laver vers le réservoir d'eau de lavage et/ou de rinçage ;
- la figure 5 est une vue schématique des deux parois en forme de coque d'un réservoir d'eau de lavage et/ou de rinçage conforme à un mode de réalisation de l'invention, où est représenté le trajet de l'eau de lavage et/ou de rinçage dans ledit réservoir d'eau lors de la vidange de l'eau de lavage et/ou de rinçage du réservoir d'eau vers la cuve de lavage de la machine à laver ;
- la figure 6 est une première vue schématique en perspective d'une vanne multivoies reliant une cuve de lavage, un réservoir d'eau de lavage et/ou de rinçage d'une machine à laver et un réseau d'eau usée externe selon un mode de réalisation de l'invention ;
- la figure 7 est une deuxième vue schématique en perspective d'une vanne multivoies reliant une cuve de lavage, un réservoir d'eau de lavage et/ou de rinçage d'une machine à laver et un réseau d'eau usée externe selon un mode de réalisation de l'invention ;
- la figure 8 est une vue schématique en perspective d'un réservoir d'eau de lavage et/ou de rinçage conforme à un mode de réalisation de l'invention, où les deux parois en forme de coque sont assemblées ensemble, et où une vanne multivoies et une pompe de circulation d'eau sont assemblées sur une paroi du réservoir d'eau ;
- la figure 9 est une vue schématique éclatée d'une vanne multivoies selon un mode de réalisation de l'invention ;
- la figure 10 est une vue schématique d'une vanne multivoies selon un mode de réalisation illustrant le positionnement d'inserts dans le corps de ladite vanne, où les clapets sont ôtés ;
- les figures 11 et 12 sont des vues schématiques en perspective d'un insert d'une vanne multivoies selon un mode de réalisation de l'invention ;
- la figure 13 est une vue schématique de face d'un insert d'une vanne multivoies selon un mode de réalisation de l'invention ;
- la figure 14 est une vue schématique en coupe A-A de la figure 13 ;
- la figure 15 est une vue schématique de dessus de la figure 13 ;
- la figure 16 est une première vue schématique de dessus d'une vanne multivoies selon un mode de réalisation, où le couvercle et les clapets de ladite vanne ont été ôtés ;
- la figure 17 est une vue en coupe B-B de la figure 16 ;
- la figure 18 est une vue en coupe C-C de la figure 16 ;
- la figure 19 est une deuxième vue schématique de dessus d'une vanne multivoies selon un mode de réalisation, où le couvercle a été ôté ;
- la figure 20 est une vue en coupe D-D de la figure 19 ; et
- la figure 21 est une vue de détail E de la figure 20.

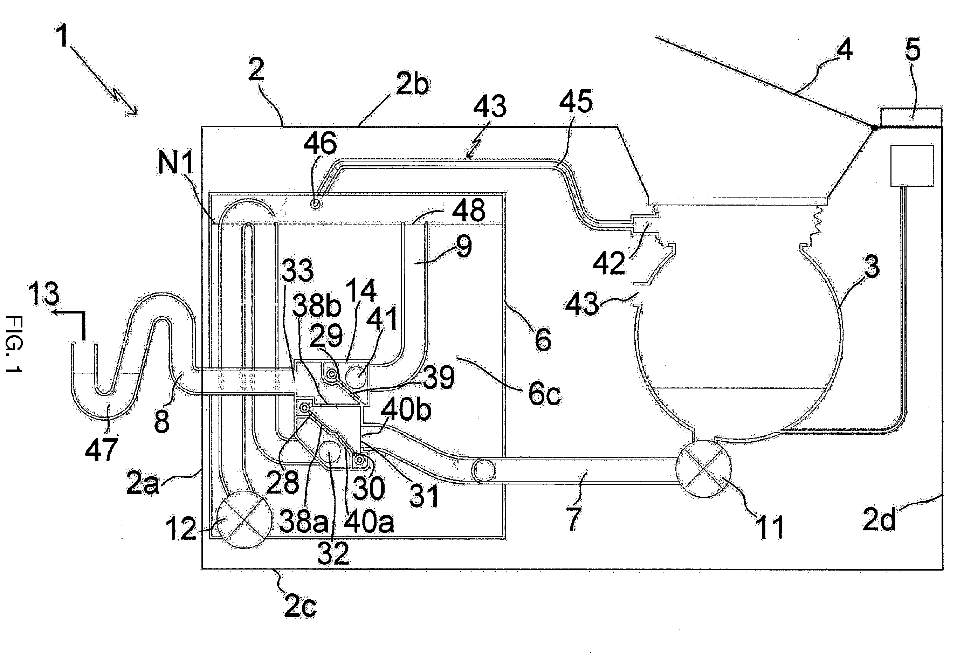

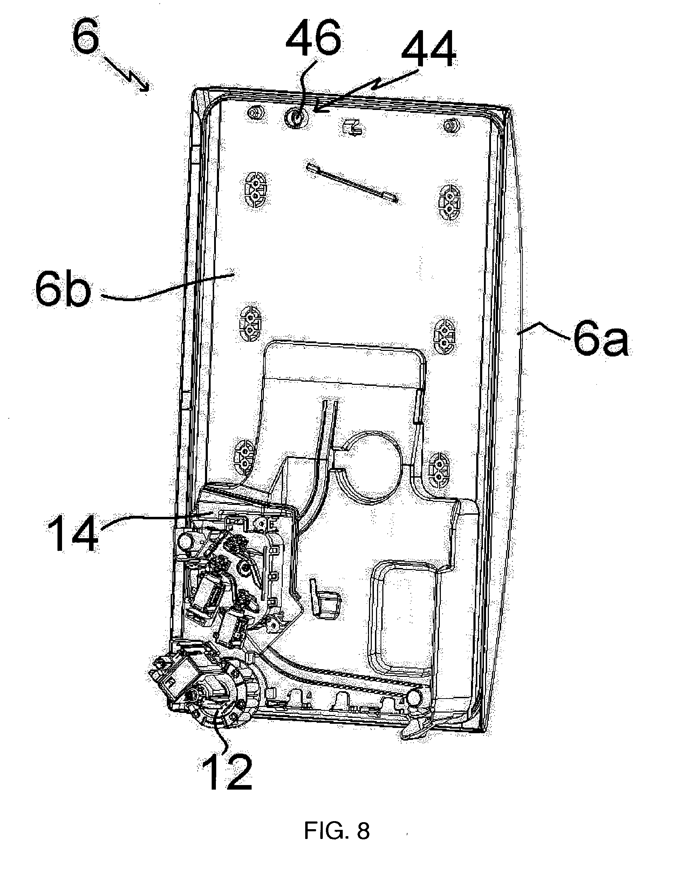

On va décrire, en référence aux figures 1 à 8, une machine à laver conforme à l'invention.

Cette machine à laver peut être une machine à laver la vaisselle à usage domestique, une machine à laver le linge à usage domestique ou une machine à laver et à sécher le linge à usage domestique.

On a illustré un mode de réalisation, en référence à la figure 1, décrivant une machine à laver le linge à chargement du linge par le dessus. Bien entendu, la présente invention s'applique à tous les types de machine à laver, et notamment à chargement frontal.

Une machine à laver 1 comprend une carrosserie 2. La carrosserie 2 de la machine à laver 1 comprend une paroi avant 2a, une paroi arrière 2d, deux parois latérales, une paroi supérieure 2b et une paroi inférieure 2c.

De manière classique, une telle machine à laver le linge 1 comprend une carrosserie 2 adaptée à loger une cuve de lavage 3.

Un tambour (non représenté) destiné à contenir le linge peut être monté en rotation à l'intérieur de la cuve de lavage 3.

La carrosserie 2 comporte une ouverture supérieure permettant d'introduire et de retirer le linge dans le tambour.

Cette ouverture d'accès peut être obturée lors du fonctionnement de la machine 1 par une porte 4 montée pivotante sur la carrosserie 2 de la machine 1.

Un tableau de commande 5 est également prévu en partie supérieure de la machine à laver 1.

Bien entendu, cette machine à laver le linge 1 comporte tous les organes nécessaires (non représentés) au fonctionnement et à l'exécution des cycles de lavage, de rinçage et d'essorage du linge.

La machine à laver 1 comprend un réservoir d'eau 6, en particulier un réservoir d'eau de lavage et/ou de rinçage.

Préférentiellement, le réservoir d'eau 6 est interne à la carrosserie 2 de la machine à laver 1.

Le réservoir d'eau 6 peut être fixé sur la carrosserie 2 de la machine à laver 1, par exemple sur une paroi de la carrosserie 2, telle que la paroi avant 2a, la paroi arrière 2d ou une paroi latérale.

Bien entendu, le positionnement et/ou la fixation du réservoir d'eau de lavage et/ou de rinçage avec la carrosserie de la machine à laver ne sont nullement limitatifs et peuvent être différents.

La machine à laver 1 comprend un circuit hydraulique de distribution d'eau, où le circuit hydraulique de distribution d'eau relie la cuve de lavage 3 de la machine à laver 1 au réservoir d'eau 6.

La machine à laver 1 peut comprendre une alimentation en eau du réseau (non représentée) de sorte à remplir la cuve de lavage 3 lors des différentes phases d'un cycle de lavage avec de l'eau n'ayant pas été utilisée lors d'une phase précédente du cycle de fonctionnement en cours ou lors d'un cycle de fonctionnement précédent.

Le circuit hydraulique de distribution d'eau de la machine à laver 1 peut être alimenté en eau du réseau par une conduite d'arrivée d'eau du réseau (non représentée) reliée directement à la machine à laver 1 depuis un réseau d'eau externe au moyen d'une électrovanne permettant de réguler la quantité d'eau nécessaire au fonctionnement de la machine à laver 1.

Le circuit hydraulique de distribution d'eau comprend au moins une pompe de circulation d'eau 11 de sorte à remplir en eau de lavage et/ou de rinçage le réservoir d'eau 6 depuis la cuve de lavage 3 de la machine à laver 1.

Avantageusement, au moins une pompe de circulation d'eau 11, 12 du circuit hydraulique de distribution d'eau permet de mettre en circulation de l'eau de lavage et/ou de rinçage depuis le réservoir d'eau 6 vers la cuve de lavage 3 de la machine à laver 1, et inversement.

Le circuit hydraulique de distribution d'eau comprend une pluralité de conduites de d'écoulement d'eau 7, 8, 9, 10.

Dans un mode de réalisation, le circuit hydraulique de distribution d'eau comprend :
o une première pompe de circulation d'eau 11 reliant la cuve de lavage 3 à une vanne multivoies 14, et
o une deuxième pompe de circulation d'eau 12 reliant le réservoir d'eau de lavage et/ou de rinçage 6 à la vanne multivoies 14.

Ici, la première pompe de circulation d'eau 11 montée en sortie de la cuve de lavage 3 de la machine à laver 1 permet d'une part d'alimenter en eau de lavage et/ou de rinçage le réservoir d'eau 6 depuis la cuve de lavage 3 de la machine à laver 1 et d'autre part de vidanger la cuve de lavage 3 vers le réseau d'eau usée externe 13. Et la deuxième pompe de circulation d'eau 12 montée sur le réservoir d'eau 6 permet d'une part d'alimenter en eau de lavage et/ou de rinçage la cuve de lavage 3 de la machine à laver 1 depuis le réservoir d'eau 6 et d'autre part de vidanger le réservoir d'eau 6 vers le réseau d'eau usée externe 13.

Une desdites première et deuxième pompes de circulation d'eau 11, 12 est adaptée à permettre le passage d'un flux d'eau depuis la cuve de lavage 3 jusqu'au réservoir d'eau 6, et inversement, lorsque celle-ci est inactive pendant qu'une autre desdites première et deuxième pompes de circulation d'eau 11, 12 est active.

Ainsi, une desdites première et deuxième pompes de circulation d'eau 11, 12 étant à l'arrêt est adaptée à laisser passer un flux d'eau au travers de celle-ci lorsque l'autre desdites première et deuxième pompes de circulation d'eau 11, 12 fonctionne de sorte à ne pas bloquer la circulation d'eau au travers du circuit hydraulique de distribution d'eau de la machine à laver 1, et inversement.

De cette manière, le circuit hydraulique de distribution d'eau entre la cuve de lavage 3 et le réservoir d'eau 6 comportant deux pompes de circulation d'eau 11, 12 et une vanne multivoies 14 est simplifié de sorte à limiter les coûts d'obtention et à garantir la fiabilité de la machine à laver 1.

Avantageusement, lesdites première et deuxième pompes de circulation d'eau 11, 12 sont des pompes centrifuges.

La spécificité de ces pompes centrifuges consiste en ce qu'elles permettent le passage d'un flux d'eau à l'intérieur de leur corps lorsqu'elles ne sont pas mises en fonctionnement.

Ici, la deuxième pompe de circulation d'eau 12 est située en un point bas du réservoir d'eau 6.

Ainsi, la deuxième pompe de circulation d'eau 12 permet de vider le réservoir d'eau 6.

Le positionnement de la deuxième pompe de circulation d'eau 12 étant une pompe centrifuge est également lié à sa conception puisque cette pompe de circulation d'eau ne peut fonctionner qu'en étant gavée d'eau et non en aspirant de l'eau.

Par ailleurs, le positionnement de la deuxième pompe de circulation d'eau 12 en un point bas du réservoir d'eau 6 est également lié à l'espace disponible à l'intérieur de la carrosserie 2 de la machine à laver 1 de sorte à optimiser les dimensions de la cuve de lavage 3 de la machine à laver 1 et du réservoir d'eau 6.

Le réservoir d'eau 6 comprend au moins une connexion pour une conduite de circulation d'eau 7, et une connexion pour une conduite de vidange 8.

Le réservoir d'eau 6 est alimenté en eau de lavage et/ou de rinçage par une conduite de circulation d'eau 7 provenant de la cuve de lavage 3 de la machine à laver 1. L'alimentation en eau de lavage et/ou de rinçage du réservoir d'eau 6 depuis la cuve de lavage 3 de la machine à laver 1 peut être mise en oeuvre par la première pompe de circulation d'eau 11 de la machine à laver 1, en particulier une pompe de vidange.

Le réservoir d'eau 6 alimente en eau de lavage et/ou de rinçage, d'une phase précédente d'un cycle de fonctionnement en cours de mise en oeuvre ou d'un cycle de fonctionnement précédent, la cuve de lavage 3 de la machine à laver 1 par une conduite de circulation d'eau 7. L'alimentation en eau de lavage et/ou de rinçage de la cuve de lavage 3 de la machine à laver 1 depuis le réservoir d'eau 6 peut être mise en oeuvre par la deuxième pompe de circulation d'eau 12 du réservoir d'eau 6, en particulier une pompe de vidange.

Dans ce mode de réalisation, la conduite de circulation d'eau 7 peut servir :
- d'une part à alimenter en eau de lavage et/ou de rinçage le réservoir d'eau 6 depuis la cuve de lavage 3 de la machine à laver 1, et
- d'autre part à alimenter en eau de lavage et/ou de rinçage, d'une phase précédente d'un cycle de fonctionnement en cours de mise en oeuvre ou d'un cycle de fonctionnement précédent, la cuve de lavage 3 de la machine à laver 1 depuis le réservoir d'eau 6.

Bien entendu et de manière nullement limitative, l'alimentation en eau de lavage et/ou de rinçage depuis la cuve de lavage 3 de la machine à laver 1 vers le réservoir d'eau 6, et inversement, peut être mise en oeuvre au moyen de conduites d'écoulement d'eau différentes.

La conduite de circulation d'eau 7 peut également servir à vidanger la cuve de lavage 3 de la machine à laver 1 en dirigeant de l'eau de lavage et/ou de rinçage vers le réseau d'eau usée externe 13 suite au passage de cette eau de lavage et/ou de rinçage au travers d'organes montés sur le réservoir d'eau 6, en particulier la vanne multivoies 14, et sans avoir été stockée dans le réservoir d'eau 6.

Le réservoir d'eau 6 est vidangé de l'eau de lavage et/ou de rinçage provenant de la cuve de lavage 3 de la machine à laver 1, où l'eau de lavage et/ou de rinçage est stockée dans une zone de stockage d'eau de lavage et/ou de rinçage 6c dudit réservoir d'eau 6, par une conduite de vidange 8 connectée au réservoir d'eau 6, en particulier par la vanne multivoies 14, et au réseau d'eau usée externe 13.

La conduite de vidange 8 peut servir à la vidange de l'eau de lavage et/ou de rinçage contenue dans le réservoir d'eau 6 et à l'eau de lavage et/ou de rinçage contenue dans la cuve de lavage 3 de la machine à laver 1 vers le réseau d'eau usée externe 13, en particulier au moyen de la vanne multivoies 14.

La conduite de circulation d'eau 7 reliant la cuve de lavage 3 de la machine à laver 1 au réservoir d'eau 6 et la conduite de vidange 8 reliant le réservoir d'eau 6 au réseau d'eau usée externe 13 sont interconnectées au moyen de la vanne multivoies 14 de sorte à diriger l'eau de lavage et/ou de rinçage vers le réseau d'eau usée externe 13 soit directement en sortie de la cuve de lavage 3 de la machine à laver 1 soit après le passage dans le réservoir d'eau 6.

Dans un mode de réalisation tel qu'illustré à la figure 1, la vanne multivoies 14 est connectée à quatre conduites 7, 8, 9, 10 d'entrée et/ou sortie d'eau de lavage et/ou de rinçage.

Une première conduite de circulation d'eau 10 est connectée à la vanne multivoies 14 et à la deuxième pompe de circulation d'eau 12 installée à un point bas du réservoir d'eau 6.

La première conduite de circulation d'eau 10 est ménagée à l'intérieur du réservoir d'eau 6, et en particulier formée par des parois du réservoir d'eau 6.

Dans ce mode de réalisation, la première conduite de circulation d'eau 10 peut servir :
- d'une part à alimenter en eau de lavage et/ou de rinçage le réservoir d'eau 6 depuis la cuve de lavage 3 de la machine à laver 1, et
- d'autre part à alimenter en eau de lavage et/ou de rinçage, d'une phase précédente d'un cycle de fonctionnement en cours de mise en oeuvre ou d'un cycle de fonctionnement précédent, la cuve de lavage 3 de la machine à laver 1 depuis le réservoir d'eau 6.

La deuxième conduite de circulation d'eau 7 est connectée en sortie de la première pompe de circulation d'eau 11 et à la vanne multivoies 14, ladite première pompe de circulation d'eau 11 étant connectée à la sortie de vidange de la cuve de lavage 3 de la machine à laver 1.

Ici, la deuxième conduite de circulation d'eau 7 est réalisée en deux parties. La première partie de la deuxième conduite de circulation d'eau 7 est une conduite souple connectée en sortie de la première pompe de circulation d'eau 11 et à une ouverture de passage d'eau du réservoir d'eau 6. Et la deuxième partie de la deuxième conduite de circulation d'eau 7 est une conduite ménagée à l'intérieur du réservoir d'eau 6 connectée à l'ouverture de passage d'eau du réservoir d'eau 6 et à la vanne multivoies 14.

Une conduite de vidange 8 est connectée d'une part à la vanne multivoies 14, en particulier à une ouverture d'entrée d'eau 41 de la vanne multivoies 14, et d'autre part au réseau d'eau usée externe 13. La conduite de vidange 8 est une conduite souple.

Une conduite de trop plein 9 est ménagée à l'intérieur du réservoir d'eau 6. Une extrémité de la conduite de trop plein 9 comprend une ouverture d'entrée d'eau 48 débouchant à l'intérieur du réservoir d'eau 6. L'ouverture d'entrée d'eau 48 de la conduite de trop plein 9 est située de préférence à la même hauteur ou au-dessus du niveau d'eau maximum admissible N1 à l'intérieur du réservoir d'eau 6. Une autre extrémité de la conduite de trop plein 9 est connectée à la vanne multivoies 14.

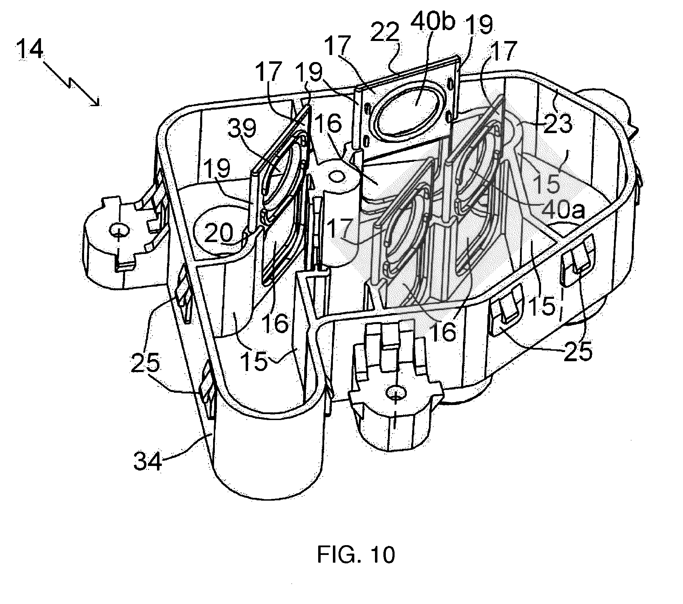

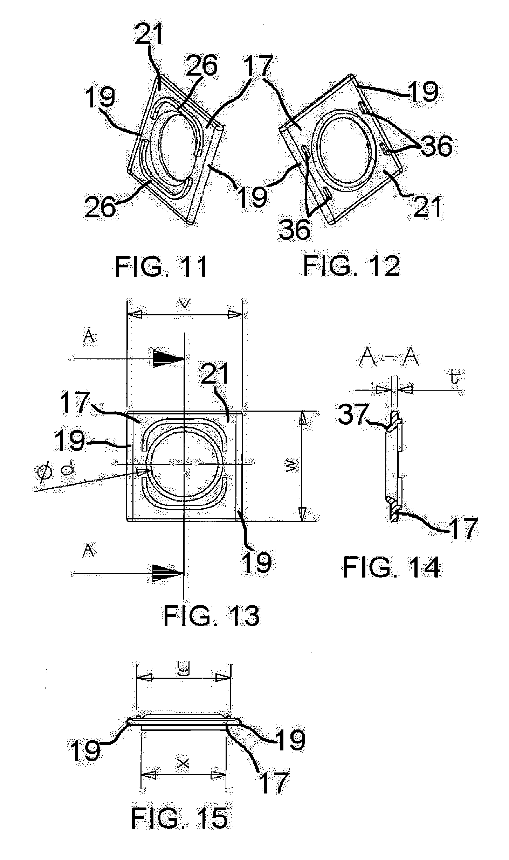

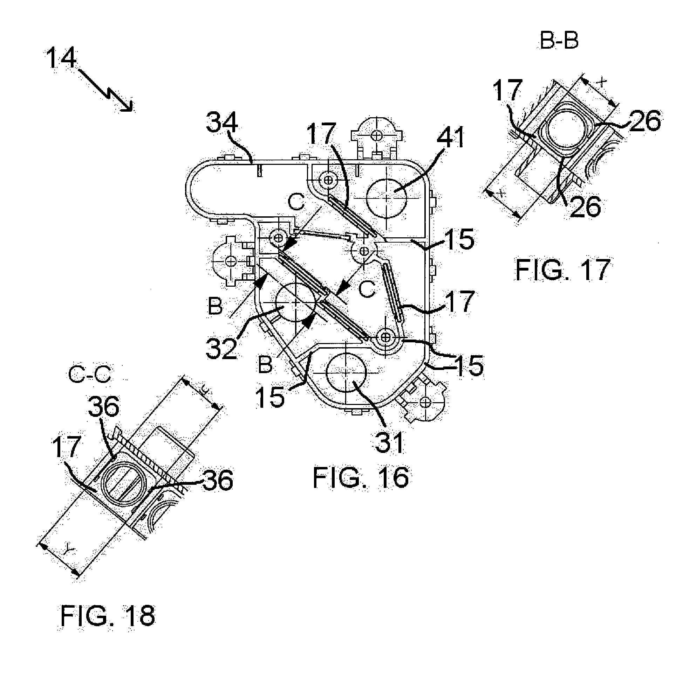

On va décrire, en référence aux figures 1, 6, 7, 9 à 21, une vanne multivoies selon un mode de réalisation, permettant en particulier de relier une cuve de lavage et un réservoir d'eau d'une machine à laver et un réseau d'eau usée externe.

La vanne multivoies 14 comprend un corps 34. Le corps 34 comprend des parois de canalisation de flux d'eau 15 de sorte à former des chambres à l'intérieur du corps 34.

La vanne multivoies 14 comprend des ouvertures de passage d'eau 31, 32, 33, 41 de sorte à permettre un écoulement d'eau depuis l'extérieur vers l'intérieur de la vanne multivoies 14, et inversement.

La vanne multivoies 14 comprend des passages d'écoulement d'eau 38a, 38b, 39, 40a, 40b ménagés à l'intérieur du corps 34 de sorte à permettre un écoulement d'eau entre les chambres du corps 34.

Avantageusement, les passages d'écoulement d'eau 38a, 38b, 39, 40a, 40b ménagés à l'intérieur du corps 34 de la vanne multivoies 14 présentent une section équivalente à la section des conduites de circulation d'eau 7, 8, 9, 10 connectées aux ouvertures de passage d'eau 31, 32, 33, 41 de la vanne multivoies 14.

Ainsi, la vitesse et la pression des flux d'eau traversant les passages d'écoulement d'eau 38a, 38b, 39, 40a, 40b ménagés à l'intérieur du corps 34 de la vanne multivoies 14 sont maintenues sensiblement constantes en entrée et en sortie de la vanne multivoies 14.

Ici, les passages d'écoulement d'eau 38a, 38b, 39, 40a, 40b ménagés à l'intérieur du corps 34 de la vanne multivoies 14 ont une forme circulaire.

Bien entendu, la forme des passages d'écoulement d'eau ménagés à l'intérieur du corps de la vanne multivoies n'est nullement limitative et peut être différente.

La vanne multivoies 14 comprend des clapets 28, 29, 30 obturant ou dégageant les passages d'écoulement d'eau 38a, 38b, 39, 40a, 40b de sorte à orienter des flux d'eau à l'intérieur du corps 34.

Lors de l'utilisation de la vanne multivoies 14, les passages d'écoulement d'eau 38a, 38b, 39, 40a, 40b sont obturés ou dégagés par les clapets 28, 29, 30.

Au moins l'une des parois de canalisation de flux d'eau 15 du corps 34 comprend une ouverture 16 à l'intérieur de laquelle est disposé un insert 17, où ledit au moins un insert 17 comporte l'un des passages d'écoulement d'eau 38a, 39, 40a, 40b.

Ainsi, la disposition d'un insert 17 dans une ouverture 16 d'au moins l'une des parois de canalisation de flux d'eau 15 du corps 34 de la vanne multivoies 14 permet de réaliser une vanne multivoies 14 avec au moins un passage d'écoulement d'eau 38a, 39, 40a, 40b au travers d'un insert 17 de sorte à minimiser l'encombrement de la vanne multivoies 14, réduire le coût d'obtention de la vanne multivoies 14 et de faciliter l'obtention de celle-ci en simplifiant l'outil de fabrication de celle-ci de sorte à garantir sa fiabilité et sa robustesse.

Une telle vanne multivoies 14 permet de ménager une pluralité de passages d'écoulement d'eau 38a, 38b, 39, 40a, 40b à l'intérieur du corps 34 de la vanne 14 et pouvant être orientés dans des directions distinctes.

En outre, la disposition d'un insert 17 dans une ouverture 16 d'au moins l'une des parois de canalisation de flux d'eau 15 du corps 34 de la vanne multivoies 14 permet de garantir l'étanchéité lors de l'obturation d'un passage d'écoulement d'eau 38a, 39, 40a, 40b ménagé dans l'insert 17 par un clapet 28, 29, 30.

Ici, une pluralité de parois de canalisation de flux d'eau 15, en particulier quatre parois de canalisation de flux d'eau 15, du corps 34 comprend respectivement une ouverture 16 à l'intérieur de laquelle est disposé un insert 17, où ledit au moins un insert 17 comporte l'un des passages d'écoulement d'eau 38a, 39, 40a, 40b.

Ici et de manière nullement limitative, le passage d'écoulement d'eau 38a, 39, 40a, 40b ménagé dans l'insert 17 est une ouverture circulaire de diamètre Ød.

Préférentiellement, les clapets 28, 29, 30 comportent respectivement au moins un joint d'étanchéité 18, où un joint d'étanchéité 18 de l'un des clapets 28, 29, 30 coopère avec l'insert 17 d'au moins l'une des parois de canalisation de flux d'eau 15 de sorte à obturer le passage d'écoulement d'eau 38a, 39, 40a, 40b ménagé dans l'insert 17.

Ainsi, le joint d'étanchéité 18 d'un clapet 28, 29, 30 permet de garantir l'étanchéité lors de la mise en appui d'un clapet 28, 29, 30 avec un insert 17 d'une paroi de canalisation de flux d'eau 15 du corps 34 de la vanne multivoies 14.

En outre, le montage du joint d'étanchéité 18 sur le clapet 28, 29, 30 permet d'éviter une étanchéité complexe à réaliser au niveau d'un passage d'écoulement d'eau 38a, 39, 40a, 40b ménagé dans un insert 17.

L'obturation de l'un des passages d'écoulement d'eau 38a, 39, 40a, 40b ménagé dans un insert 17 est réalisée par la mise en contact du joint d'étanchéité 18 de l'un des clapets 28, 29, 30 avec une paroi 21 de l'insert 17, le clapet 28, 29, 30 se déplaçant selon un mouvement angulaire autour d'un axe de rotation 50, où l'axe de rotation 50 du clapet 28, 29, 30 est maintenu dans le corps 34 de la vanne multivoies 14.

Avantageusement, au moins l'un des clapets 28, 29, 30 permet d'obturer l'un des passages d'écoulement d'eau 38a, 38b, 39, 40a, 40b tout en dégageant un autre des passages d'écoulement d'eau 38a, 38b, 39, 40a, 40b de sorte à garantir l'étanchéité de l'une des chambres de la vanne multivoies 14 et à permettre l'écoulement d'un flux d'eau entre deux autres chambres de la vanne multivoies 14.

Le joint d'étanchéité 18 garantit l'étanchéité entre un clapet 28, 29, 30 et l'un des passages d'écoulement d'eau 38a, 39, 40a, 40b ménagé dans un insert 17 tout en s'affranchissant des dispersions de positionnement du clapet 28, 29, 30 et d'un actionneur 27a, 27b déplaçant le clapet 28, 29, 30, lors de l'entraînement en rotation du clapet 28, 29, 30 autour de son axe de rotation 50.

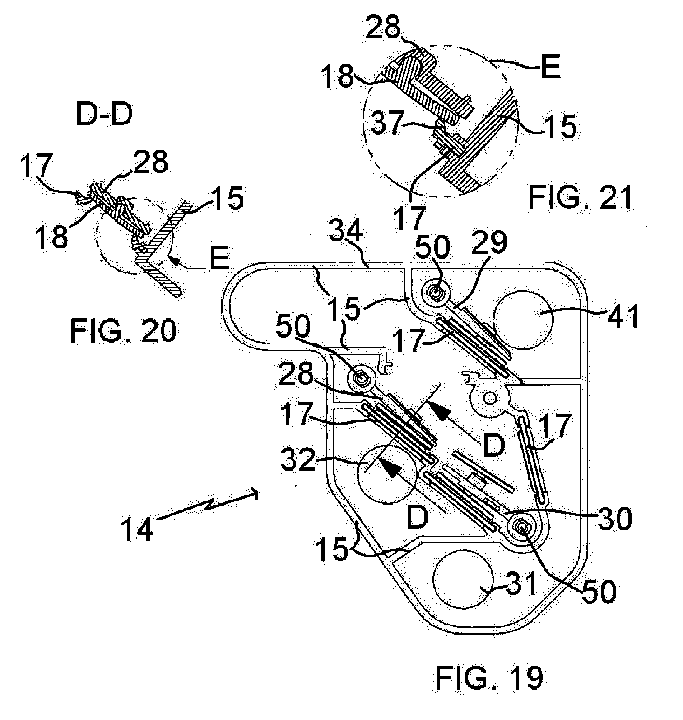

Préférentiellement, le joint d'étanchéité 18 est maintenu au centre du clapet 28, 29, 30 de sorte à permettre au joint d'étanchéité 18 de pivoter par son centre, tel qu'illustré aux figures 20 et 21.

Ainsi, le maintien du joint d'étanchéité 18 par une liaison de pivot avec le clapet 28, 29, 30 permet de limiter les contraintes exercées sur le joint d'étanchéité 18 lors de l'obturation de l'un des passages d'écoulement d'eau 38a, 39, 40a, 40b ménagé dans un insert 17 par l'entraînement en rotation du clapet 28, 29, 30 autour de son axe de rotation 50.

Ici et de manière nullement limitative, le joint d'étanchéité 18 des clapets 28, 29, 30 est en élastomère thermoplastique.

Dans un mode de réalisation tel qu'illustré à la figure 19, un clapet 30 comprend deux joints d'étanchéité 18 disposés de part et d'autre d'une paroi du clapet 30, où chaque joint d'étanchéité 18 coopère avec un insert 17 de sorte à obturer respectivement un passage d'écoulement d'eau 40a, 40b ménagé dans un insert 17.

En outre, les joints d'étanchéité 18 sont maintenus respectivement au centre du clapet 30 et de part et d'autre de la paroi du clapet 30 de sorte à permettre à chacun des deux joints d'étanchéité 18 de pivoter par son centre.

Préférentiellement, le joint d'étanchéité 18 entoure une section supérieure à la section du passage d'écoulement d'eau 38a, 39, 40a, 40b à obturer par l'un des clapets 28, 29, 30, le passage d'écoulement d'eau 38a, 39, 40a, 40b étant ménagé dans l'insert 17 de la paroi de canalisation de flux d'eau 15.

Ainsi, le joint d'étanchéité 18 d'un clapet 28, 29, 30 permet de garantir l'étanchéité en recouvrant un insert 17 d'une paroi de canalisation de flux d'eau 15 au-delà du passage d'écoulement d'eau 38a, 39, 40a, 40b ménagé dans l'insert 17.

Ici, le joint d'étanchéité 18 d'un clapet 28, 29, 30 est de forme circulaire.

La forme circulaire du joint d'étanchéité 18 d'un clapet 28, 29, 30 permet de s'affranchir d'une orientation de celui-ci par rapport à l'un des passages d'écoulement d'eau 38a, 39, 40a, 40b ménagé dans un insert 17

Bien entendu, la forme du joint d'étanchéité d'un clapet n'est nullement limitative et peut être différente.

Ici, ledit au moins un insert 17 est de forme sensiblement parallélépipédique.

Bien entendu, la forme dudit au moins un insert n'est nullement limitative et peut être différente.

Préférentiellement, ledit au moins un insert 17 comporte une paroi 21 dans laquelle est ménagé l'un desdits passages d'écoulement d'eau 38a, 39, 40a, 40b, où la paroi 21 présente un renflement 19 s'étendant respectivement le long d'un premier bord et d'un deuxième bord de la paroi 21, le premier bord étant opposé au deuxième bord de la paroi 21, et où le renflement 19 des premier et deuxième bords de la paroi 21 coopère avec une rainure 20 de l'ouverture 16 ménagée dans l'une des parois de canalisation de flux d'eau 15.

Ainsi, le positionnement du renflement 19 des premier et deuxième bords de la paroi 21 de l'insert 17 à l'intérieur d'une rainure 20 de l'ouverture 16 ménagée dans l'une des parois de canalisation de flux d'eau 15 permet de garantir l'étanchéité entre l'insert 17 et la paroi de canalisation de flux d'eau 15.

Préférentiellement, le renflement 19 desdits premier et deuxième bords de la paroi 21 étant de forme cylindrique présente un diamètre supérieur par rapport à la largeur de la rainure 20 de l'ouverture 16 ménagée dans l'une des parois de canalisation de flux d'eau 15.

Ainsi, l'étanchéité entre l'insert 17 et la paroi de canalisation de flux d'eau 15 est garantie par un ajustement serré.

Avantageusement, le renflement 19 des premier et deuxième bords de la paroi 21 de l'insert 17 étant de forme cylindrique présente un diamètre supérieur à l'épaisseur t de la paroi 21 de l'insert 17.

Ici, le renflement 19 des premier et deuxième bords de la paroi 21 de l'insert 17 est réalisée sur deux bords opposés de la paroi 21 de l'insert 17 de sorte à pouvoir assembler l'insert 17 dans un premier sens ou dans un deuxième sens dans une rainure 20 d'une ouverture 16 d'une paroi de canalisation de flux d'eau 15.

Ainsi, la vanne multivoies 14 peut comprendre plusieurs inserts 17 identiques et pouvant être assemblés respectivement dans l'ouverture 16 de l'une des parois de canalisation de flux d'eau 15 du corps 34 de la vanne multivoies 14.

Avantageusement, la largeur v dudit au moins un insert 17 est déterminée en fonction de l'ouverture 16 ménagée dans l'une des parois de canalisation de flux d'eau 15 de sorte à garantir l'étanchéité entre le renflement 19 des premier et deuxième bords de la paroi 21 dudit au moins un insert 17 et une rainure 20 de l'ouverture 16 ménagée dans l'une des parois de canalisation de flux d'eau 15.

Ici, l'épaisseur t de la paroi 21 de l'insert 17 est constante suivant la hauteur de l'insert 17 de sorte à pouvoir assembler l'insert 17 dans un premier sens ou dans un deuxième sens dans une rainure 20 d'une ouverture 16 d'une paroi de canalisation de flux d'eau 15.

Ainsi, la vanne multivoies 14 peut comprendre plusieurs inserts 17 identiques et pouvant être assemblés respectivement dans l'ouverture 16 de l'une des parois de canalisation de flux d'eau 15 du corps 34 de la vanne multivoies 14.

Avantageusement, la hauteur w dudit au moins un insert 17 est déterminée en fonction de l'ouverture 16 ménagée dans l'une des parois de canalisation de flux d'eau 15 de sorte à aligner un bord supérieur 22 dudit au moins un insert 17 avec un bord supérieur 23 de la paroi de canalisation de flux d'eau 15.

Ainsi, suite au positionnement d'un insert 17 à l'intérieur d'une ouverture 16 ménagée dans l'une des parois de canalisation de flux d'eau 15, le bord supérieur 22 de l'insert 17 et le bord supérieur 23 de la paroi de canalisation de flux d'eau 15 sont alignés.

De cette manière, il est possible de contrôler la conformité de l'assemblage de l'insert 17 sur le corps 34 de la vanne multivoies 14 et de garantir l'étanchéité de la vanne multivoies 14.

Préférentiellement, la vanne multivoies 14 comprend également un couvercle 35, où un joint d'étanchéité 24 est disposé sur le bord supérieur 23 des parois de canalisation de flux d'eau 15 du corps 34 et sur le bord supérieur 22 dudit au moins un insert 17, et où le joint d'étanchéité 24 est maintenu en position par la fixation du couvercle 35 sur le corps 34 au moyen d'éléments de fixation 25.

Ainsi, la compression d'un joint d'étanchéité 24 entre le bord supérieur 23 des parois de canalisation de flux d'eau 15 du corps 34 de la vanne multivoies 14, le bord supérieur 22 dudit au moins un insert 17 et le couvercle 35 de la vanne multivoies 14 permet de garantir l'étanchéité entre les chambres de la vanne multivoies 14 formées par les parois de canalisation de flux d'eau 15 et le ou les inserts 17.

Ici, ledit au moins un insert 17 comprend une lèvre 37 ménagée sur l'une des faces dudit au moins un insert 17 et autour du passage d'écoulement d'eau 38a, 39, 40a, 40b ménagé dans ledit au moins un insert 17.

Ainsi, la lèvre 37 d'un insert 17 permet de rigidifier l'insert 17 puisque ce dernier comprend un passage d'écoulement d'eau 38a, 39, 40a, 40b.

En outre, lors de l'obturation de l'un des passages d'écoulement d'eau 38a, 39, 40a, 40b ménagé dans un insert 17 par un clapet 28, 29, 30, l'étanchéité est garantie entre le joint d'étanchéité 18 du clapet 28, 29, 30 et la lèvre 37 de l'insert 17 par l'application d'une force d'appui exercée par l'actionneur 27a, 27b du clapet 28, 29, 30 tout en évitant une déformation de l'insert 17.

Par ailleurs, lors de l'obturation de l'un des passages d'écoulement d'eau 38a, 39, 40a, 40b ménagé dans un insert 17 par un clapet 28, 29, 30, la force d'appui exercée par l'actionneur 27a, 27b du clapet 28, 29, 30 engendre une déformation du joint d'étanchéité 18 du clapet 28, 29, 30 prenant appui contre la lèvre 37 de l'insert 17 de sorte à garantir l'étanchéité, tel qu'illustré à la figure 20.

De préférence, la lèvre 37 dudit au moins un insert 17 est ménagée sur la face dudit au moins un insert 17 mise en contact avec le joint d'étanchéité 18 de l'un des clapets 28, 29, 30.

Ici, tel qu'illustré aux figures 20 et 21, lors de l'obturation de l'un des passages d'écoulement d'eau 38a, 39, 40a, 40b ménagé dans un insert 17 par un clapet 28, 29, 30, l'étanchéité est garantie par la mise en contact du joint d'étanchéité 18 d'un clapet 28, 29, 30 contre l'extrémité de la lèvre 37 d'un insert 17 s'étendant autour d'un passage d'écoulement d'eau 38a, 39, 40a, 40b ménagé dans l'insert 17.

Dans un mode de réalisation tel qu'illustré à la figure 19, un clapet 30 comprend deux joints d'étanchéité 18 disposés de part et d'autre d'une paroi du clapet 30, où chaque joint d'étanchéité 18 coopère avec la lèvre 37 d'un insert 17 de sorte à garantir l'étanchéité entre le clapet 30 et un insert 17.

Avantageusement, ledit au moins un insert 17 comprend respectivement sur une première face et une deuxième face un dispositif de positionnement 26, 36 coopérant avec des bords opposés de l'ouverture 16 de l'une des parois de canalisation de flux d'eau 15.

Ainsi, le positionnement d'un insert 17 dans une ouverture 16 de l'une des parois de canalisation de flux d'eau 15 est détrompé de sorte à éviter une erreur d'assemblage pouvant engendrer une fuite d'eau lors de l'obturation du passage d'écoulement d'eau 38a, 39, 40a, 40b de l'insert 17 par l'un des clapets 28, 29, 30.

Préférentiellement, le dispositif de positionnement 26, 36 des première et deuxième faces dudit au moins un insert 17 est différent.

Ainsi, le positionnement d'un insert 17 dans une ouverture 16 de l'une des parois de canalisation de flux d'eau 15 est détrompé pour tous les sens d'insertion de l'insert 17 dans l'ouverture 16 de l'une des parois de canalisation de flux d'eau 15.

Ici, le dispositif de positionnement 26, 36 des première et deuxième faces dudit au moins un insert 17 est réalisé par des nervures 26, 36 différentes pour chacune des faces dudit au moins un insert 17.

Pratiquement, ledit dispositif de positionnement 26, 36 ménagé respectivement sur la première face et la deuxième face dudit au moins un insert 17 comprend respectivement au moins deux nervures 26, 36 disposées respectivement de part et d'autre du passage d'écoulement d'eau 38a, 39, 40a, 40b, où l'écartement x entre les nervures 26 de la première face dudit au moins un insert 17 coopère avec l'écartement X de deux premiers bords opposés de l'ouverture 16 de l'une des parois de canalisation de flux d'eau 15, et où l'écartement y entre les nervures 36 de la deuxième face dudit au moins un insert 17 coopère avec l'écartement Y de deux deuxièmes bords opposés de l'ouverture 16 de la paroi de canalisation de flux d'eau 15.

Ainsi, le positionnement d'un insert 17 dans une ouverture 16 de l'une des parois de canalisation de flux d'eau 15 est détrompé pour tous les sens d'insertion de l'insert 17 dans l'ouverture 16 de l'une des parois de canalisation de flux d'eau 15, et par exemple il est empêché d'assembler l'insert 17 dans l'ouverture 16 de la paroi de canalisation de flux d'eau 15 en faisant correspondre l'écartement y entre les nervures 36 de la deuxième face de l'insert 17 avec l'écartement X de deux premiers bords opposés de l'ouverture 16 de la paroi de canalisation de flux d'eau 15.

En outre, l'écartement x, y entre les nervures 26, 36 de la première face et de la deuxième face dudit au moins un insert 17 coopère avec l'écartement X, Y de deux bords opposés de l'ouverture 16 de l'une desdites parois de canalisation de flux d'eau 15 tout en garantissant un jeu de montage nécessaire lors de l'assemblage de la vanne multivoies 14.

Avantageusement, les premiers bords opposés et les deuxièmes bords opposés de l'ouverture 16 de l'une des parois de canalisation de flux d'eau 15 sont disposés dans deux plans parallèles, où les deux plans parallèles sont distants d'un écartement supérieur ou égal à l'épaisseur t dudit au moins un insert 17.

Ici, les premiers bords opposés et les deuxièmes bords opposés de l'ouverture 16 de l'une des parois de canalisation de flux d'eau 15 sont distants d'un écartement correspondant à la largeur de la rainure 20 de l'ouverture 16 à l'intérieur de laquelle un insert 17 est positionné.

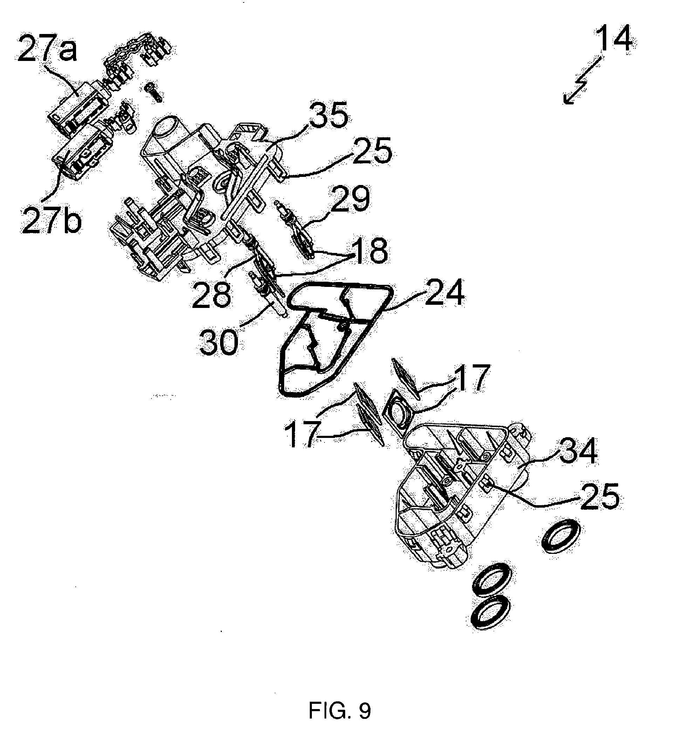

Dans le mode de réalisation illustré aux figures 9 à 21, le passage d'écoulement d'eau 38b est réalisé par une ouverture 16 ménagée dans une paroi de canalisation de flux d'eau 15 sans ajouter un insert 17 à l'intérieur de celle-ci. Le passage d'écoulement d'eau 38b est ainsi obtenu par le positionnement du couvercle 35 sur le corps 34 de la vanne multivoies 14. Ce passage d'écoulement d'eau 38b est réalisé directement dans une paroi de canalisation de flux d'eau 15 puisque celui-ci nécessite une étanchéité pouvant être moins efficace par rapport à celle des autres passages d'écoulement d'eau 38a, 39, 40a, 40b.

Les passages d'écoulement d'eau 38a, 39, 40a, 40b nécessitant de garantir l'étanchéité de manière efficace lors de l'obturation de ceux-ci par les clapets 28, 29, 30 sont réalisés au travers d'inserts 17 montés au travers d'ouvertures 16 des parois de canalisation de flux d'eau 15.

Ici, la vanne multivoies 14 comprend plusieurs actionneurs 27a, 27b permettant de piloter les clapets 28, 29, 30 de sorte à ouvrir ou à fermer les passages d'écoulement d'eau 38a, 38b, 39, 40a, 40b reliant la cuve de lavage 3 de la machine à laver 1, le réservoir d'eau 6 et le réseau d'eau usée externe 13.

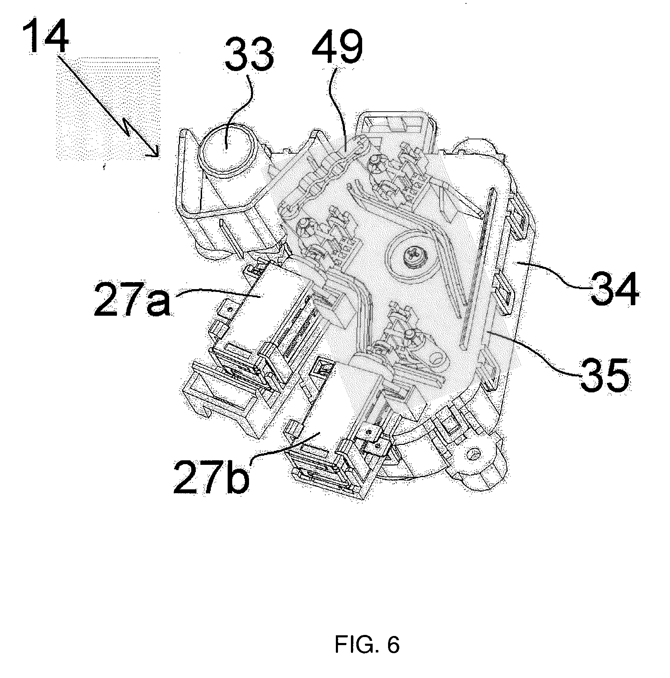

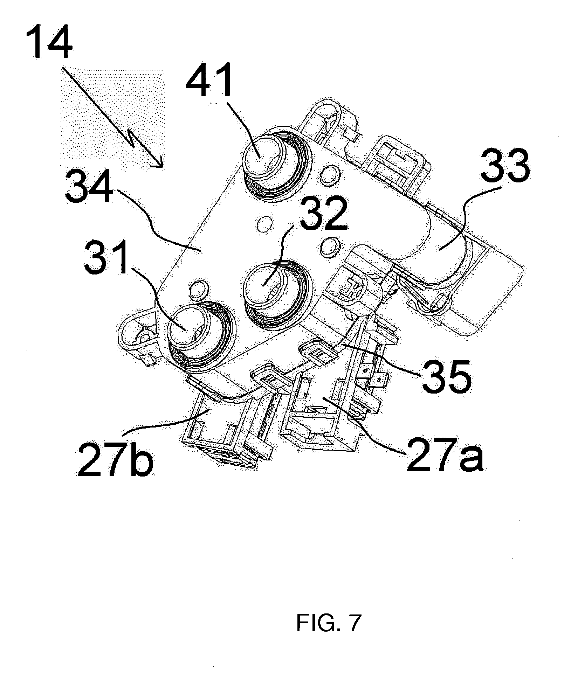

Les actionneurs 27a, 27b de la vanne multivoies 14 peuvent être des vérins à dilatation de cire, tel qu'illustré aux figures 6 et 7.

Bien entendu, les actionneurs de la vanne multivoies peuvent être différents, tel que par exemple des moteurs électriques, des électroaimants, etc.

Dans ce mode de réalisation, la vanne multivoies 14 comprend deux actionneurs 27a, 27b.

Bien entendu, le nombre d'actionneurs de la vanne n'est nullement limitatif et peut être différent.

Préférentiellement, la vanne multivoies 14 est en matière plastique.

A titre d'exemple nullement limitatif, la vanne multivoies 14 est réalisée en polypropylène, ou en acrylonitrile butadiène styrène communément appelé ABS.

La matière plastique peut également être chargée, en particulier avec un agent antibactérien.

Dans ce mode de réalisation, la vanne multivoies 14 est montée sur le réservoir d'eau 6, et en particulier en partie inférieure du réservoir d'eau 6. La vanne multivoies 14 comprend :
- une première ouverture d'entrée/sortie d'eau 31 reliée à la cuve de lavage 3 de la machine à laver 1 au moyen de la deuxième conduite de circulation d'eau 7,
- une deuxième ouverture d'entrée/sortie d'eau 32 reliée à une zone de stockage d'eau de lavage et/ou de rinçage 6c du réservoir d'eau 6 au moyen de la première conduite d'écoulement d'eau 10,
- une ouverture de sortie d'eau 33 reliée au réseau d'eau usée externe 13 au moyen de la conduite de vidange 8, et
- une ouverture d'entrée d'eau 41 connectée à la conduite de trop plein 9 du réservoir d'eau 6 permettant d'évacuer un surplus d'eau de lavage et/ou de rinçage lors du remplissage du réservoir d'eau 6 avec de l'eau de lavage et/ou de rinçage provenant de la cuve de lavage 3 de la machine à laver 1.

Ici, la vanne multivoies 14 est constituée par le corps 34 et le couvercle 35. Le couvercle 35 est fixé sur le corps 34 de la vanne multivoies 14 par des éléments de fixation 25 classiques, par exemple du type par vissage, encliquetage élastique. Ces éléments de fixations sont bien connus de l'homme du métier et n'ont pas besoin d'être décrits plus en détail ici.

Dans un mode de réalisation, le réservoir d'eau 6 comprend deux parois 6a, 6b en forme de coque.

Une première coque 6a peut constituer une partie d'une paroi de la carrosserie 2 de la machine à laver 1, en particulier de la paroi avant 2a de la carrosserie 2.

Une deuxième coque 6b est disposée à l'intérieur de la carrosserie 2 de la machine à laver 1 et comporte les organes de fonctionnement du réservoir d'eau 6, tels que la vanne multivoies 14 et la pompe de circulation d'eau 12, ainsi que le dispositif de mise à l'air 44 du réservoir d'eau 6.

La zone de stockage d'eau de lavage et/ou de rinçage 6c du réservoir d'eau 6 est formée par l'assemblage des deux coques 6a, 6b du réservoir d'eau 6.

La première conduite de circulation d'eau 10, la conduite de trop plein 9 et une partie de la deuxième conduite de circulation d'eau 7 sont ménagées à l'intérieur du réservoir d'eau 6 et formées par l'assemblage des deux coques 6a, 6b du réservoir d'eau 6.

La fixation des deux parois 6a, 6b en forme de coque du réservoir d'eau 6 peut être réalisée par soudure.

Bien entendu, le mode de fixation des deux parois en forme de coque du réservoir d'eau n'est nullement limitatif et peut être différent, en particulier par vissage.

On va décrire à présent le fonctionnement d'une machine à laver conforme à un mode de réalisation de l'invention.

La première pompe de circulation d'eau 11 est adaptée à vidanger au moins une partie de l'eau de lavage et/ou de rinçage depuis la cuve de lavage 3 jusqu'au réservoir d'eau 6 en générant un flux d'eau de lavage et/ou de rinçage traversant la vanne multivoies 14 et la deuxième pompe de circulation d'eau 12 étant inactive.

Ainsi, l'eau de lavage et/ou de rinçage contenue dans la cuve de lavage 3 de la machine à laver 1 peut être vidangée dans le réservoir d'eau 6 de sorte à permettre la réutilisation de celle-ci lors d'une phase suivante d'un cycle de fonctionnement en cours ou lors d'un cycle de fonctionnement suivant en stockant l'eau de lavage et/ou de rinçage dans le réservoir d'eau 6.

La vidange de l'eau de lavage et/ou de rinçage contenue dans la cuve de lavage 3 de la machine à laver 1 s'effectue en activant la première pompe de circulation d'eau 11 installée dans la machine à laver 1, en ouvrant une ouverture de sortie de la vanne multivoies 14 et en maintenant à l'arrêt la deuxième pompe de circulation d'eau 12 de sorte qu'un flux d'eau soit mis en circulation entre la cuve de lavage 3 de la machine à laver 1 et le réservoir d'eau 6.

De cette manière, l'eau de lavage et/ou de rinçage peut traverser la deuxième pompe de circulation d'eau 12 sans opposer une résistance lorsque la première pompe de circulation d'eau 11 est mise en fonctionnement de sorte à vidanger de l'eau de lavage et/ou de rinçage contenue dans la cuve de lavage 3 de la machine à laver 1 à l'intérieur du réservoir d'eau 6.

L'eau de lavage et/ou de rinçage peut traverser la deuxième pompe de circulation d'eau 12 grâce aux jeux internes de cette deuxième pompe de circulation d'eau 12 lorsque la première pompe de circulation d'eau 11 est mise en fonctionnement.

Et, la deuxième pompe de circulation d'eau 12 est adaptée à vidanger au moins une partie de l'eau de lavage et/ou de rinçage depuis le réservoir d'eau 6 jusqu'à la cuve de lavage 3 en générant un flux d'eau de lavage et/ou de rinçage traversant la vanne multivoies 14 et la première pompe de circulation d'eau 11 étant inactive.

Ainsi, l'eau de lavage et/ou de rinçage contenue dans le réservoir d'eau 6 peut être vidangée dans la cuve de lavage 3 de la machine à laver 1 de sorte à réutiliser celle-ci lors d'une phase suivante d'un cycle de fonctionnement en cours ou lors d'un cycle de fonctionnement suivant suite au stockage de l'eau de lavage et/ou de rinçage dans le réservoir d'eau 6.

La vidange de l'eau de lavage et/ou de rinçage contenue dans le réservoir d'eau 6 s'effectue en activant la deuxième pompe de circulation d'eau 12 installée dans le réservoir d'eau 6, en ouvrant une ouverture de sortie de la vanne multivoies 14 et en maintenant à l'arrêt la première pompe de circulation d'eau 11 de sorte qu'un flux d'eau soit mis en circulation entre le réservoir d'eau 6 et la cuve de lavage 3 de la machine à laver 1.

De cette manière, l'eau de lavage et/ou de rinçage peut traverser la première pompe de circulation d'eau 11 sans opposer une résistance lorsque la deuxième pompe de circulation d'eau 12 est mise en fonctionnement de sorte à vidanger de l'eau de lavage et/ou de rinçage contenue dans le réservoir d'eau 6 à l'intérieur de la cuve de lavage 3 de la machine à laver 1.

L'eau de lavage et/ou de rinçage peut traverser la première pompe de circulation d'eau 11 grâce aux jeux internes de cette première pompe de circulation d'eau 11 lorsque la deuxième pompe de circulation d'eau 12 est mise en fonctionnement.

Dans ce mode de réalisation, la vanne multivoies 14 est une unique vanne à trois voies permettant de sélectionner la vidange de la cuve de lavage 3 de la machine à laver 1 vers le réservoir d'eau 6 ou vers le réseau d'eau usée externe 13, ou la vidange du réservoir d'eau 6 vers la cuve de lavage 3 de la machine à laver 1 ou vers le réseau d'eau usée externe 13, et d'évacuer le surplus d'eau introduit dans le réservoir d'eau 6 au réseau d'usée externe 13.

L'utilisation d'une vanne multivoies 14 comportant trois voies permet de réduire les coûts d'obtention de la machine à laver 1 équipée d'un réservoir d'eau de lavage et/ou de rinçage 6 et de simplifier la gestion de la sélection de la direction des flux d'eau de lavage et/ou de rinçage 6 dans le circuit hydraulique de distribution d'eau de la machine à laver 1.

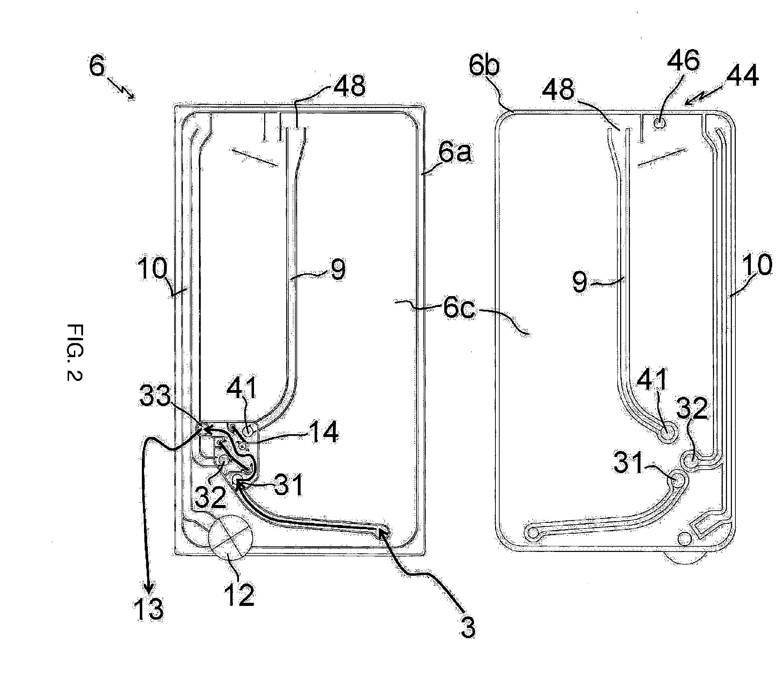

La figure 2 illustre une phase de vidange de la cuve de lavage 3 de la machine à laver 1 vers le réseau d'eau usée externe 13.

Cette phase de vidange de la cuve de lavage 3 de la machine à laver 1 vers le réseau d'eau usée externe 13 s'effectue en activant la première pompe de circulation d'eau 11, en ouvrant la vanne multivoies 14 depuis la cuve de lavage 3 de la machine à laver 1 vers le réseau d'eau usée externe 13 et en mettant en circulation l'eau de lavage et/ou de rinçage au travers de la deuxième conduite de circulation d'eau 7 et de la conduite de vidange 8.

Le réservoir d'eau 6 et la deuxième pompe de circulation d'eau 12 ne sont pas traversés par le flux d'eau pour la vidange de l'eau de lavage et/ou de rinçage contenue dans la cuve de lavage 3 de la machine à laver 1 vers le réseau d'eau usée externe 13.

Lors de cette phase de vidange de la cuve de lavage 3 de la machine à laver 1 vers le réseau d'eau usée externe 13, le réservoir d'eau 6 peut être indifféremment rempli ou vide.

A la figure 2, lors de la phase de vidange de la cuve de lavage 3 de la machine à laver 1 vers le réseau d'eau usée externe 13, la vanne multivoies 14 est dans une position initiale où un flux d'eau s'écoule de la cuve de lavage 3 de la machine à laver 1 vers le réseau d'eau usée externe 13 en traversant ladite vanne multivoies 14. Le flux d'eau entre par l'ouverture d'entrée/sortie d'eau 31 et sort par l'ouverture de sortie d'eau 33 de la vanne multivoies 14.

Au cours de cette phase de vidange de la cuve de lavage 3 de la machine à laver 1 vers le réseau d'eau usée externe 13, les actionneurs 27a, 27b de la vanne multivoies 14 ne sont pas alimentés en énergie.

Ainsi, les clapets 28, 29, 30 de la vanne multivoies 14 ne sont pas actionnés et restent en position initiale. Les clapets 28, 29, 30 obturent respectivement les passages d'écoulement d'eau 38a, 39, 40a. Les passages d'écoulement d'eau 38b, 40b sont alors ouverts pour permettre la circulation du flux d'eau au travers des passages d'écoulement d'eau 38b, 40b.

De cette manière, la cuve de lavage 3 de la machine à laver 1 peut être vidangée lorsque la vanne multivoies 14 est en panne. La machine à laver 1 peut ainsi être mise en fonctionnement sans utiliser le réservoir d'eau 6.

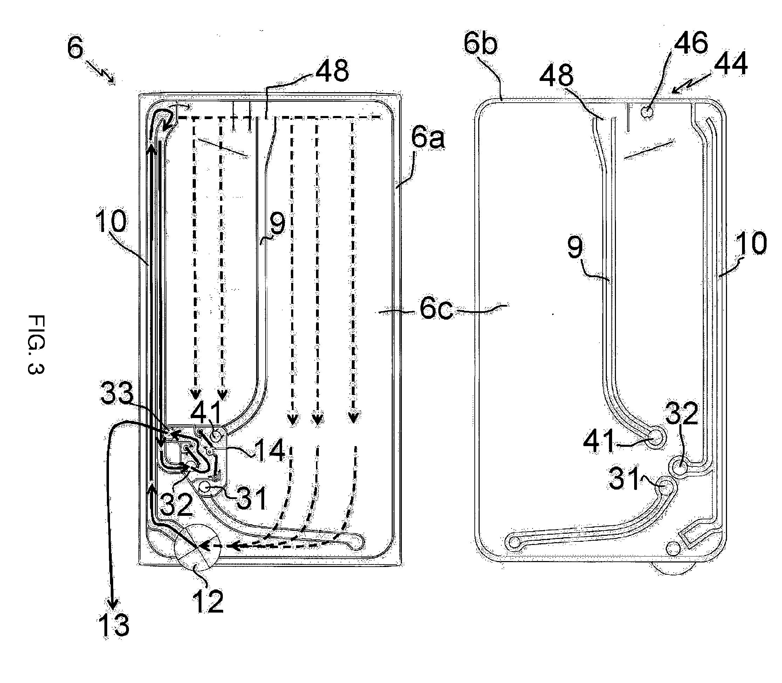

La figure 3 illustre une phase de vidange du réservoir d'eau 6 vers le réseau d'eau usée externe 13.

Cette phase de vidange du réservoir d'eau 6 vers le réseau d'eau usée externe 13 s'effectue en activant la deuxième pompe de circulation d'eau 12, en ouvrant la vanne multivoies 14 depuis le réservoir d'eau 6 vers le réseau d'eau usée externe 13 et en mettant en circulation l'eau de lavage et/ou de rinçage au travers de la première conduite de circulation d'eau 10 et de la conduite de vidange 8.

La première pompe de circulation d'eau 11 n'est pas traversée par le flux d'eau pour la vidange de l'eau de lavage et/ou de rinçage contenue dans le réservoir d'eau 6 vers le réseau d'eau usée externe 13.

Cette phase de vidange du réservoir d'eau 6 peut être mise en oeuvre soit automatiquement soit manuellement.

La vidange automatique du réservoir d'eau 6 peut être mise en oeuvre périodiquement suite à la détermination de l'atteinte d'une durée prédéterminée de non utilisation de la machine à laver 1 par une unité de commande de ladite machine à laver 1.

De cette manière, la deuxième pompe de circulation d'eau 12 peut être mise en fonctionnement automatiquement pour vidanger l'eau de lavage et/ou de rinçage du réservoir d'eau 6 vers le réseau d'eau usée externe 13 grâce à l'unité de commande de la machine à laver 1.

La vidange manuelle du réservoir d'eau 6 peut être mise en oeuvre suite à l'activation par l'utilisateur d'une commande de vidange du réservoir d'eau 6 envoyée à l'unité de commande de la machine à laver 1.

L'utilisateur peut souhaiter vidanger l'eau de lavage et/ou de rinçage du réservoir d'eau 6 vers le réseau d'eau usée externe 13, notamment, en cas de crainte d'une charge de linge souillée, de doute sur l'eau de lavage et/ou de rinçage recueillie, ou encore pour le déplacement de la machine à laver 1.

A la figure 3, lors de la phase de vidange du réservoir d'eau 6 vers le réseau d'eau usée externe 13, un flux d'eau s'écoule du réservoir d'eau 6 vers le réseau d'eau usée externe 13 en traversant la vanne multivoies 14. Le flux d'eau entre par l'ouverture d'entrée/sortie d'eau 32 et sort par l'ouverture de sortie d'eau 33 de la vanne multivoies 14.

Au cours de cette phase de vidange du réservoir d'eau 6 vers le réseau d'eau usée externe 13, l'actionneur 27a de la vanne multivoies 14 n'est pas alimenté en énergie tandis que l'actionneur 27b est alimenté en énergie.

Ainsi, les clapets 28, 29 de la vanne multivoies 14 ne sont pas actionnés tandis que le clapet 30 est actionné. Les clapets 28, 29, 30 obturent respectivement les passages d'écoulement d'eau 38a, 39, 40b. Les passages d'écoulement d'eau 38b, 40a sont alors ouverts pour permettre la circulation du flux d'eau au travers des passages d'écoulement d'eau 38b, 40a.

En référence à la figure 1, lors de phase de vidange du réservoir d'eau 6, l'introduction d'air dans le réservoir d'eau 6 est assurée par un dispositif de mise à l'air 43 de la cuve de lavage 3 relié à une zone 42 de la cuve de lavage 3, et par le dispositif de mise à l'air 44 du réservoir d'eau 6 reliant la zone 42 en communication fluidique avec la cuve de lavage 3 au réservoir d'eau 6 au travers du tube d'écoulement d'air 45.

De cette manière, le réservoir d'eau 6 se remplit en air au fur et à mesure que celui-ci se vide de l'eau de lavage et/ou de rinçage.

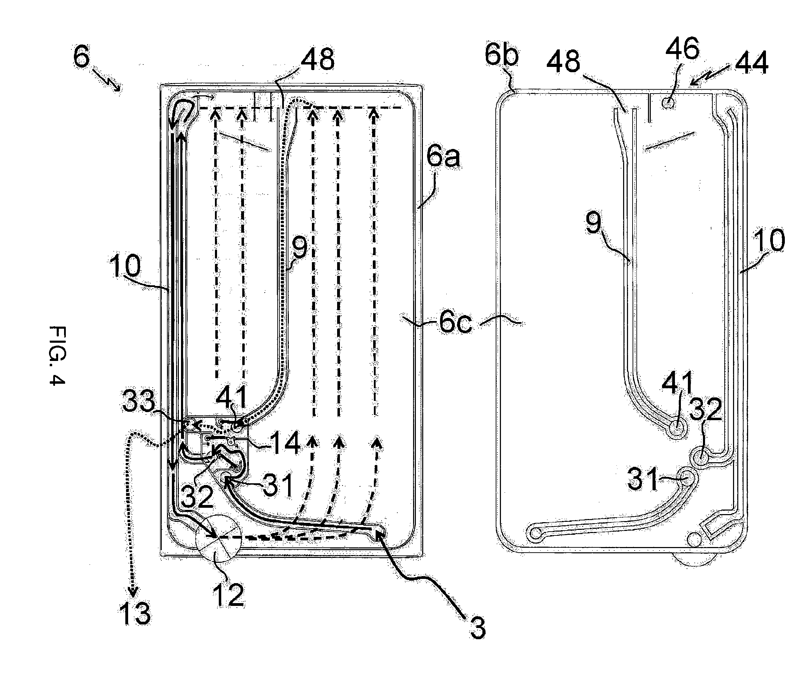

La figure 4 illustre une phase de vidange de la cuve de lavage 3 de la machine à laver 1 vers le réservoir d'eau 6 de sorte à récupérer l'eau de lavage et/ou de rinçage utilisée lors d'une phase d'un cycle de fonctionnement mis en oeuvre par la machine à laver 1.

Cette phase de vidange de la cuve de lavage 3 de la machine à laver 1 vers le réservoir d'eau 6 s'effectue en activant la première pompe de circulation d'eau 11, en ouvrant la vanne multivoies 14 depuis la cuve de lavage 3 de la machine à laver 1 vers le réservoir d'eau 6, en mettant en circulation l'eau de lavage et/ou de rinçage au travers de la deuxième conduite de circulation d'eau 7, de la première conduite de circulation d'eau 10 et en traversant la deuxième pompe de circulation d'eau 12 étant à l'arrêt.

A la figure 4, lors de la phase de vidange de la cuve de lavage 3 de la machine à laver 1 vers le réservoir d'eau 6, un flux d'eau s'écoule de la cuve de lavage 3 de la machine à laver 1 vers le réservoir d'eau 6 en traversant la vanne multivoies 14. Le flux d'eau entre par l'ouverture d'entrée/sortie d'eau 31 et sort par l'ouverture d'entrée/sortie d'eau 32 de la vanne multivoies 14.

Au cours de cette phase de vidange de la cuve de lavage 3 de la machine à laver 1 vers le réservoir d'eau 6, l'actionneur 27b de la vanne multivoies 14 n'est pas alimenté en énergie tandis que l'actionneur 27a est alimenté en énergie.

Ainsi, les clapets 28, 29 de la vanne multivoies 14 sont actionnés tandis que le clapet 30 n'est pas actionné. Les clapets 28, 30 obturent respectivement les passages d'écoulement d'eau 38b, 40a. Les passages d'écoulement d'eau 38a, 40b sont alors ouverts pour permettre la circulation du flux d'eau au travers des passages d'écoulement d'eau 38a, 40b.

De cette manière, le réservoir d'eau 6 se remplit en eau de lavage et/ou de rinçage provenant de la cuve de lavage 3 de la machine à laver 1 au fur et à mesure que le réservoir d'eau 6 se vide de l'air contenu à l'intérieur par le dispositif de mise à l'air 44 du réservoir d'eau 6.

L'air sortant de ladite au moins une ouverture de passage d'air 46 ménagée dans une paroi du réservoir d'eau 6 est évacué vers l'extérieur au travers de la cuve de lavage 3 de la machine à laver 1.

Ici, le réservoir d'eau 6 est vidé de son air contenu à l'intérieur de celui-ci, ce flux d'air traversant ladite au moins une ouverture de passage d'air 46 ménagée dans une paroi 6b du réservoir d'eau 6, puis circulant au travers du tube d'écoulement d'air 45 débouchant dans une zone 42 en communication fluidique avec la cuve de lavage 3 de la machine à laver 1.

De cette manière, l'air contenu à l'intérieur du réservoir d'eau 6 est évacué au travers du tube d'écoulement d'air 45 jusqu'à la zone 42 en communication fluidique avec la cuve de lavage 3 de la machine à laver 1, puis à l'extérieur de la cuve de lavage 3 par un dispositif de mise à l'air 43 de cette dernière.

Ainsi, un phénomène de turbulence sonore est évité en envoyant l'air contenu dans le réservoir d'eau 6 vers une zone 42 en communication fluidique avec la cuve de lavage 3 de la machine à laver 1 au lieu d'envoyer l'air dans le réseau d'eau usée externe 13.

Le phénomène de turbulence sonore lié à l'envoi d'air contenu à l'intérieur du réservoir d'eau 6 dans le réseau d'eau usée externe 13 est dû à l'installation de la conduite de vidange 8 comprenant généralement un coude 47 provoquant une stagnation d'eau en ce point.

Lors du remplissage en eau de lavage et/ou de rinçage du réservoir d'eau 6, l'air s'échappant du réservoir d'eau 6 vers le réseau d'eau usée externe 13 au travers de la conduite de vidange 8 est bloqué par de l'eau stagnante dans le coude 47 de la conduite de vidange 8, et provoque une turbulence sonore amplifiée par le reste de la conduite de vidange 8. Ce phénomène de turbulence sonore est désagréable pour l'utilisateur et celui-ci peut le considérer comme une panne.

Le raccordement du réservoir d'eau 6 à la zone 42 en communication fluidique avec la cuve de lavage 3 de la machine à laver 1 au travers du tube d'écoulement d'air 45 permet d'évacuer l'air contenu à l'intérieur du réservoir d'eau 6 vers l'extérieur de sorte à supprimer le phénomène de turbulence sonore lié à l'envoi d'air dans le réseau d'eau usée externe 13.

Un surplus d'eau de lavage et/ou de rinçage alimenté dans le réservoir d'eau 6 est évacué automatiquement par la conduite de trop plein 9 vers la vanne multivoies 14 puis vers la conduite de vidange 8 jusqu'au réseau d'eau usée externe 13.

A la figure 4, lorsqu'un surplus d'eau de lavage et/ou de rinçage est alimenté dans le réservoir d'eau 6 au cours de la phase de vidange de la cuve de lavage 3 de la machine à laver 1 vers le réservoir d'eau 6, un flux d'eau s'écoule de la conduite de trop plein 9 du réservoir d'eau 6 vers le réseau d'eau usée externe 13 en traversant la vanne multivoies 14 et la conduite de vidange 8. Le flux d'eau entre dans l'ouverture d'entrée d'eau 48 de la conduite de trop plein 9, puis par l'ouverture d'entrée d'eau 41 de la vanne multivoies 14 et sort par l'ouverture de sortie d'eau 33 de la vanne multivoies 14.

Au cours de cette phase de vidange de la cuve de lavage 3 de la machine à laver 1 vers le réservoir d'eau 6, le clapet 28 obture le passage d'écoulement d'eau 38b de sorte que le flux d'eau alimentant en eau de lavage et/ou de rinçage le réservoir d'eau 6 depuis la cuve de lavage 3 et le flux d'eau s'écoulant depuis la conduite de trop plein 9 du réservoir d'eau 6 vers le réseau d'eau usée externe 13 soient séparés.

Les passages d'écoulement d'eau 38a, 40b sont alors ouverts pour permettre la circulation du flux d'eau au travers des passages d'écoulement d'eau 38a, 40b de sorte à alimenter en eau de lavage et/ou de rinçage le réservoir d'eau 6 depuis la cuve de lavage 3. Et le passage d'écoulement d'eau 39 est ouvert pour permettre la circulation du flux d'eau au travers du passage d'écoulement d'eau 39 de sorte à évacuer le surplus d'eau introduit dans le réservoir d'eau 6 vers le réseau d'eau usée externe 13.

Une faible quantité d'eau de lavage et/ou de rinçage peut passer au travers du dispositif de mise à l'air 44 du réservoir d'eau 6 lorsque la conduite de trop plein 9 est pleine et que le débit d'eau entrant dans le réservoir d'eau 6 est supérieur au débit d'eau s'écoulant dans la conduite de trop plein 9.

En particulier, une faible quantité d'eau de lavage et/ou de rinçage peut passer au travers du tube d'écoulement d'air 45 et retourner dans la cuve de lavage 3 de la machine à laver 1 sans provoquer d'incident ni pour le fonctionnement de la machine à laver 1 ni pour le linge pouvant être placé dans le tambour enfermé dans ladite cuve de lavage 3.

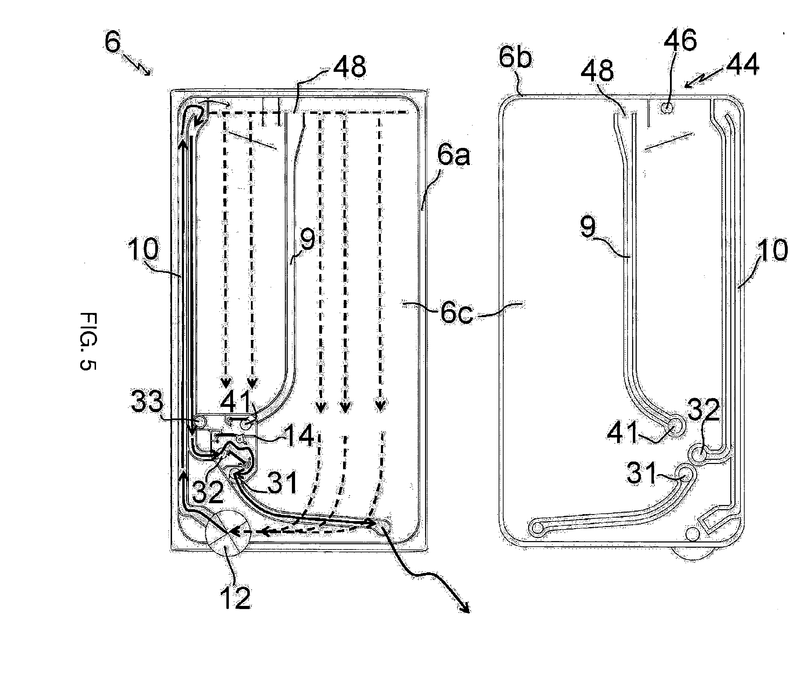

La figure 5 illustre une phase de vidange du réservoir d'eau 6 vers la cuve de lavage 3 de la machine à laver 1 de sorte à réutiliser l'eau de lavage et/ou de rinçage utilisée lors d'une phase d'un cycle de fonctionnement mis en oeuvre par la machine à laver 1 et stockée dans le réservoir d'eau 6.

Cette phase de vidange du réservoir d'eau 6 vers la cuve de lavage 3 de la machine à laver 1 s'effectue en activant la deuxième pompe de circulation d'eau 12, en ouvrant la vanne multivoies 14 depuis le réservoir d'eau 6 vers la cuve de lavage 3 de la machine à laver 1, en mettant en circulation l'eau de lavage et/ou de rinçage au travers des première et deuxième conduites de circulation d'eau 10, 7 et en traversant la première pompe de circulation d'eau 11 étant à l'arrêt.

Lors des phases de vidange de l'eau de lavage et/ou de rinçage de la cuve de lavage 3 de la machine à laver 1 vers le réservoir d'eau 6, et inversement, ceux-ci sont couplés hydrauliquement par la vanne multivoies 14.

A la figure 5, lors de la phase de vidange du réservoir d'eau 6 vers la cuve de lavage 3 de la machine à laver 1, un flux d'eau s'écoule du réservoir d'eau 6 vers la cuve de lavage 3 de la machine à laver 1 en traversant la vanne multivoies 14. Le flux d'eau entre par l'ouverture d'entrée/sortie d'eau 32 et sort par l'ouverture d'entrée/sortie d'eau 31 de la vanne multivoies 14.

Au cours de cette phase de vidange du réservoir d'eau 6 vers la cuve de lavage 3 de la machine à laver 1, l'actionneur 27b de la vanne multivoies 14 n'est pas alimenté en énergie tandis que l'actionneur 27a est alimenté en énergie.

Ainsi, les clapets 28, 29 de la vanne multivoies 14 sont actionnés tandis que le clapet 30 n'est pas actionné. Les clapets 28, 30 obturent respectivement les passages d'écoulement d'eau 38b, 40a. Les passages d'écoulement d'eau 38a, 40b sont alors ouverts pour permettre la circulation du flux d'eau au travers des passages d'écoulement d'eau 38a, 40b.

De cette manière, le réservoir d'eau 6 se remplit en air par le dispositif de mise à l'air 44 du réservoir d'eau 6 au fur et à mesure que celui-ci se vide de l'eau de lavage et/ou de rinçage contenue à l'intérieur du réservoir d'eau 6 vers la cuve de lavage 3 de la machine à laver 1.

L'air entrant par ladite au moins une ouverture de passage d'air 46 ménagée dans une paroi 6b du réservoir d'eau 6 est aspiré depuis l'extérieur au travers de la cuve de lavage 3 de la machine à laver 1.

Ici, le réservoir d'eau 6 est rempli par de l'air provenant de la cuve de lavage 3 de la machine à laver 1, ce flux d'air circulant au travers du tube d'écoulement d'air 45, traversant ladite au moins une ouverture de passage d'air 46 ménagée dans une paroi 6b du réservoir d'eau 6, et débouchant dans le réservoir d'eau 6.

De cette manière, l'introduction d'air dans le réservoir d'eau 6 est assurée par l'aspiration d'air au travers d'un dispositif de mise à l'air 43 de la cuve de lavage 3, d'une zone 42 en communication fluidique avec la cuve de lavage 3, puis dans le tube d'écoulement d'air 45 jusqu'au réservoir d'eau 6.

Les deux clapets 28, 29 peuvent être reliés par une biellette 49 de sorte à permettre l'ouverture et la fermeture simultanée des passages d'écoulement d'eau 38a, 38b, 39.

Ces deux clapets 28, 29 fonctionnent simultanément en ouverture et en fermeture. Par conséquent, un seul actionneur 27a associé à une biellette 49 est nécessaire pour permettre le déplacement de ces clapets 28, 29 de sorte à minimiser les coûts d'obtention de la vanne multivoies 14 et à simplifier la gestion de cette dernière par l'unité de commande de la machine à laver 1.

Le clapet 28 de la vanne multivoies 14 est en position ouverte à chaque fois que le réservoir d'eau 6 est en communication hydraulique avec la cuve de lavage 3 de la machine à laver 1. Par conséquent, le volume d'air et d'eau varie dans le réservoir d'eau 6 à chaque transfert d'eau entre ceux-ci.

Le clapet 29 de la vanne multivoies 14 passe également en position ouverte lors du remplissage en eau du réservoir d'eau 6 depuis la cuve de lavage 3 de la machine à laver 1 de sorte qu'un surplus d'eau introduit dans le réservoir d'eau 6 s'évacue par la conduite de trop plein 9, puis au travers de la vanne multivoies 14, et en particulier par le passage d'écoulement d'eau 39, et ensuite dans la conduite de vidange 8 jusqu'au réseau d'eau usée externe 13.

De cette manière, si la quantité d'eau de lavage et/ou de rinçage provenant de la cuve de lavage 3 de la machine à laver 1 est trop importante et ne peut entrer dans le réservoir d'eau 6, alors le passage d'écoulement d'eau 39 de la vanne multivoies 14 dégagé par l'ouverture du clapet 29 permet d'envoyer le surplus d'eau de lavage et/ou de rinçage vers le réseau d'eau usée externe 13 de la machine à laver 1.

En outre, le clapet 29 de la vanne multivoies 14 est fermé dans le cas de la vidange de l'eau de lavage et/ou de rinçage de la cuve de lavage 3 de la machine à laver 1 ou du réservoir d'eau 6 vers le réseau d'eau usée externe 13 de sorte à empêcher que de l'eau de lavage et/ou de rinçage soit introduite dans le réservoir d'eau 6 en remontant dans la conduite de trop plein 9.

Ces deux clapets 28, 29 peuvent ainsi être reliés physiquement l'un à l'autre par une biellette 49 et être actionnés simultanément par un seul actionneur 27a.

La machine à laver 1 comprend une unité de commande, en particulier un microcontrôleur, permettant de mettre en oeuvre des cycles de fonctionnement de celle-ci.

L'unité de commande de la machine à laver 1 permet de commander le remplissage et le vidage en eau de lavage et/ou de rinçage du réservoir d'eau 6 au moyen des première et deuxième pompes de circulation d'eau 11, 12 et de la vanne multivoies 14.

L'unité de commande de la machine à laver 1 permet d'alimenter en eau la cuve de lavage 3 avec de l'eau provenant du réseau d'eau externe et/ou avec de l'eau de lavage et/ou de rinçage provenant du réservoir d'eau 6.

L'alimentation en eau de la cuve de lavage 3 de la machine à laver 1 est effectuée avec de l'eau provenant du réseau d'eau externe et/ou avec de l'eau de lavage et/ou de rinçage provenant du réservoir d'eau 6 en fonction, notamment, des phases du cycle de fonctionnement mis en oeuvre par la machine à laver 1, de la quantité d'eau contenue dans le réservoir d'eau 6.

Bien entendu, les paramètres définissant la provenance de l'alimentation en eau de la cuve de lavage ne sont nullement limitatifs et peuvent être différents.

L'unité de commande de la machine à laver 1 permet également de vidanger la cuve de lavage 3 et/ou le réservoir d'eau 6 vers le réseau d'eau usée externe 13 en fonction, notamment, des phases du cycle de fonctionnement mis en oeuvre par la machine à laver 1, de la quantité d'eau contenue dans le réservoir d'eau 6, du niveau de salissures de l'eau.

Bien entendu, les paramètres définissant la décision de vidange de l'eau contenue dans la cuve de lavage et/ou dans le réservoir d'eau vers le réseau d'eau usée externe ne sont nullement limitatifs et peuvent être différents.

L'unité de commande de la machine à laver 1 est adaptée à gérer les transferts de flux d'eau dans le circuit hydraulique de distribution d'eau de la machine à laver 1.

Grâce à la présente invention, la disposition d'un insert dans une ouverture d'au moins l'une des parois de canalisation de flux d'eau du corps de la vanne multivoies permet de réaliser une vanne multivoies avec au moins un passage d'écoulement d'eau au travers d'un insert de sorte à minimiser l'encombrement de la vanne multivoies, réduire le coût d'obtention de la vanne multivoies et de faciliter l'obtention de celle-ci en simplifiant l'outil de fabrication de celle-ci de sorte à garantir sa fiabilité et sa robustesse.

Bien entendu, de nombreuses modifications peuvent être apportées aux exemples de réalisation décrits précédemment sans sortir du cadre de l'invention.

Ainsi, la vanne multivoies associée à la machine à laver pourrait être employée dans d'autres appareils électroménagers, par exemple une machine à laver la vaisselle ou une machine à laver et à sécher le linge.

## Revendications

1. Vanne multivoies (14) comprenant :
- un corps (34), ledit corps (34) comprenant des parois de canalisation de flux d'eau (15) de sorte à former des chambres à l'intérieur dudit corps (34) ;
- des ouvertures de passage d'eau (31, 32, 33, 41) de sorte à permettre un écoulement d'eau depuis l'extérieur vers l'intérieur de ladite vanne (14), et inversement ;
- des passages d'écoulement d'eau (38a, 38b, 39, 40a, 40b) ménagés à l'intérieur dudit corps (34) de sorte à permettre un écoulement d'eau entre lesdites chambres dudit corps (34) ; et
- des clapets (28, 29, 30) obturant ou dégageant lesdits passages d'écoulement d'eau (38a, 38b, 39, 40a, 40b) de sorte à orienter des flux d'eau à l'intérieur dudit corps (34) ;
**caractérisée en ce qu'**au moins l'une desdites parois de canalisation de flux d'eau (15) dudit corps (34) comprend une ouverture (16) à l'intérieur de laquelle est disposé un insert (17), où ledit au moins un insert (17) comporte l'un desdits passages d'écoulement d'eau (38a, 39, 40a, 40b).

2. Vanne multivoies (14) selon la revendication 1, **caractérisée en ce que** lesdits clapets (28, 29, 30) comportent respectivement au moins un joint d'étanchéité (18), où un joint d'étanchéité (18) de l'un desdits clapets (28, 29, 30) coopère avec ledit insert (17) d'au moins l'une desdites parois de canalisation de flux d'eau (15) de sorte à obturer un passage d'écoulement d'eau (38a, 39, 40a, 40b) ménagé dans ledit insert (17).

3. Vanne multivoies (14) selon la revendication 2, **caractérisée en ce que** ledit joint d'étanchéité (18) entoure une section supérieure à la section dudit passage d'écoulement d'eau (38a, 39, 40a, 40b) à obturer par l'un desdits clapets (28, 29, 30), ledit passage d'écoulement d'eau (38a, 39, 40a, 40b) étant ménagé dans ledit insert (17) de ladite paroi de canalisation de flux d'eau (15).

4. Vanne multivoies (14) selon l'une quelconque des revendications 1 à 3, **caractérisée en ce que** ledit insert (17) comporte une paroi (21) dans laquelle est ménagé l'un desdits passages d'écoulement d'eau (38a, 39, 40a, 40b), où ladite paroi (21) présente un renflement (19) s'étendant respectivement le long d'un premier bord et d'un deuxième bord de ladite paroi (21), ledit premier bord étant opposé audit deuxième bord de ladite paroi (21), et où ledit renflement (19) desdits premier et deuxième bords de ladite paroi (21) coopère avec une rainure (20) de ladite ouverture (16) ménagée dans l'une desdites parois de canalisation de flux d'eau (15).

5. Vanne multivoies (14) selon la revendication 4, **caractérisée en ce que** ledit renflement (19) desdits premier et deuxième bords de ladite paroi (21) étant de forme cylindrique présente un diamètre supérieur par rapport à la largeur de ladite rainure (20) de ladite ouverture (16) ménagée dans l'une desdites parois de canalisation de flux d'eau (15).

6. Vanne multivoies (14) selon l'une quelconque des revendications 1 à 5, **caractérisée en ce que** la hauteur (w) dudit au moins un insert (17) est déterminée en fonction de ladite ouverture (16) ménagée dans l'une desdites parois de canalisation de flux d'eau (15) de sorte à aligner un bord supérieur (22) dudit au moins un insert (17) avec un bord supérieur (23) de ladite paroi de canalisation de flux d'eau (15).

7. Vanne multivoies (14) selon la revendication 6, **caractérisée en ce que** ladite vanne (14) comprend également un couvercle (35), où un joint d'étanchéité (24) est disposé sur ledit bord supérieur (23) desdites parois de canalisation de flux d'eau (15) dudit corps (34) et sur ledit bord supérieur (22) dudit au moins un insert (17), et où ledit joint d'étanchéité (24) est maintenu en position par la fixation dudit couvercle (35) sur ledit corps (34) au moyen d'éléments de fixation (25).

8. Vanne multivoies (14) selon l'une quelconque des revendications 1 à 7, **caractérisée en ce que** ledit au moins un insert (17) comprend respectivement sur une première face et une deuxième face un dispositif de positionnement (26, 36) coopérant avec des bords opposés de ladite ouverture (16) de l'une desdites parois de canalisation de flux d'eau (15).

9. Vanne multivoies (14) selon la revendication 8, **caractérisée en ce que** ledit dispositif de positionnement (26, 36) ménagé respectivement sur la première face et la deuxième face dudit au moins un insert (17) comprend respectivement au moins deux nervures (26, 36) disposées respectivement de part et d'autre dudit passage d'écoulement d'eau (38a, 39, 40a, 40b), où l'écartement (x) entre lesdites nervures (26) de la première face dudit au moins un insert (17) coopère avec l'écartement (X) de deux premiers bords opposés de ladite ouverture (16) de l'une desdites parois de canalisation de flux d'eau (15), et où l'écartement (y) entre lesdites nervures (36) de la deuxième face dudit au moins un insert (17) coopère avec l'écartement (Y) de deux deuxièmes bords opposés de ladite ouverture (16) de ladite paroi de canalisation de flux d'eau (15).

10. Vanne multivoies (14) selon la revendication 9, **caractérisée en ce que** lesdits premiers bords opposés et lesdits deuxièmes bords opposés de ladite ouverture (16) de l'une desdites parois de canalisation de flux d'eau (15) sont disposés dans deux plans parallèles, où lesdits deux plans parallèles sont distants d'un écartement supérieur ou égal à l'épaisseur (t) dudit au moins un insert (17).

11. Machine à laver (1), en particulier une machine à laver le linge ou une machine à laver la vaisselle, **caractérisée en ce que** ladite machine à laver (1) comprend un réservoir d'eau (6) et une vanne multivoies (14) conforme à l'une quelconque des revendications 1 à 10.

## Patentansprüche

1. Mehrwegeventil (14), umfassend:
- einen Körper (34), wobei der besagte Körper (34) Wasserströmungsleitwände (15) umfasst, so dass im Inneren des besagten Körpers (34) Kammern gebildet werden;
- Wasserdurchgangsöffnungen (31, 32, 33, 41), um einen Wasserdurchfluss von außen ins Innere des besagten Ventils (14), und umgekehrt, zu ermöglichen;
- Wasserströmungsdurchgänge (38a, 38b, 39, 40a, 40b), die im Inneren des besagten Körpers (34) angeordnet sind, um einen Wasserdurchfluss zwischen den besagten Kammern des besagten Körpers (34) zu ermöglichen; und
- Klappen (28, 29, 30), welche die besagten Wasserströmungsdurchgänge (38a, 38b, 39, 40a, 40b) verschließen oder freigeben, um Wasserströme im Inneren des besagten Körpers (34) zu lenken;
**dadurch gekennzeichnet, dass** zumindest eine der besagten Wasserströmungsleitwände (15) des besagten Körpers (34) eine Öffnung (16) umfasst, in deren Innerem ein Einsatz (17) angeordnet ist, wobei der besagte mindestens eine Einsatz (17) einen der besagten Wasserströmungsdurchgänge (38a, 38b, 39, 40a, 40b) umfasst.

2. Mehrwegeventil (14) nach Anspruch 1, **dadurch gekennzeichnet, dass** die besagten Klappen (28, 29, 30) jeweils mindestens eine Dichtung (18) umfassen, wobei eine Dichtung (18) einer der besagten Klappen (28, 29, 30) mit dem besagten Einsatz (17) mindestens einer der besagten Wasserströmungsleitwände (15) zusammenwirkt, um einen in dem besagten Einsatz (17) angeordneten Wasserströmungsdurchgang (38a, 39, 40a, 40b) zu verschließen.

3. Mehrwegeventil (14) nach Anspruch 2, **dadurch gekennzeichnet, dass** die besagte Dichtung (18) einen Querschnitt, der größer ist als der Querschnitt des besagten von einer der besagten Klappen (28, 29, 30) zu verschließenden Wasserströmungsdurchgangs (38a, 39, 40a, 40b), umgibt, wobei der besagte Wasserströmungsdurchgang (38a, 39, 40a, 40b) in dem besagten Einsatz (17) der besagten Wasserströmungsleitwand (15) angeordnet ist.

4. Mehrwegeventil (14) nach einem beliebigen der Ansprüche 1 bis 3, **dadurch gekennzeichnet, dass** der besagte Einsatz (17) eine Wand (21) umfasst, in welcher einer der besagten Wasserströmungsdurchgänge (38a, 39, 40a, 40b) angeordnet ist, wobei die besagte Wand (21) eine Wulst (19) aufweist, die sich jeweils entlang eines ersten Randes und eines zweiten Randes der besagten Wand (21) erstreckt, wobei der besagte erste Rand dem besagten zweiten Rand der besagten Wand (21) gegenüberliegt, und wobei die besagte Wulst (19) des besagten ersten und des besagten zweiten Randes der besagten Wand (21) mit einer Nut (20) der besagten Öffnung (16), welche in einer der besagten Wasserströmungsleitwände (15) angeordnet ist, zusammenwirkt.

5. Mehrwegeventil (14) nach Anspruch 4, **dadurch gekennzeichnet, dass** die besagte Wulst (19) des besagten ersten und des besagten zweiten Randes der besagten Wand (21) zylinderförmig ist und einen Durchmesser aufweist, der größer ist als die Breite der besagten Nut (20) der besagten in einer der besagten Wasserströmungsleitwände (15) angeordneten Öffnung (16).

6. Mehrwegeventil (14) nach einem beliebigen der Ansprüche 1 bis 5, **dadurch gekennzeichnet, dass** die Höhe (w) des besagten mindestens einen Einsatzes (17) in Abhängigkeit von der besagten in einer der besagten Wasserströmungsleitwände (15) angeordneten Öffnung (16) bestimmt wird, so dass ein oberer Rand (22) des besagten mindestens einen Einsatzes (17) mit einem oberen Rand (23) der besagten Wasserströmungsleitwand (15) ausgerichtet ist.

7. Mehrwegeventil (14) nach Anspruch 6, **dadurch gekennzeichnet, dass** das besagte Ventil (14) ebenfalls eine Abdeckung (35) umfasst, wobei auf dem besagten oberen Rand (23) der besagten Wasserströmungsleitwände (15) des besagten Körpers (34) und auf dem besagten oberen Rand (22) des besagten mindestens einen Einsatzes (17) eine Dichtung (24) angebracht ist, und wobei die besagte Dichtung (24) durch die Befestigung der besagten Abdeckung (35) auf dem besagten Körper (34) anhand von Befestigungselementen (25) in Position gehalten wird.

8. Mehrwegeventil (14) nach einem beliebigen der Ansprüche 1 bis 7, **dadurch gekennzeichnet, dass** der besagte mindestens eine Einsatz (17) jeweils auf einer ersten Seite und einer zweiten Seite eine Positionierungsvorrichtung (26, 36) umfasst, welche mit den sich gegenüberliegenden Rändern der besagten Öffnung (16) einer der besagten Wasserströmungsleitwände (15) zusammenwirkt.

9. Mehrwegeventil (14) nach Anspruch 8, **dadurch gekennzeichnet, dass** die besagten jeweils auf der ersten und der zweiten Seite des besagten mindestens einen Einsatzes (17) angeordnete Positionierungsvorrichtung (26, 36) jeweils mindestens zwei jeweils beiderseits des besagten Wasserströmungsdurchgangs (38a, 39, 40a, 40b) angeordnete Rippen (26, 36) aufweist, wobei der Abstand (x) zwischen den besagten Rippen (26) der ersten Seite des besagten mindestens einen Einsatzes (17) mit dem Abstand (X) der beiden ersten sich gegenüberliegenden Ränder der besagten Öffnung (16) einer der besagten Wasserströmungsleitwände (15) zusammenwirkt, und wobei der Abstand (y) zwischen den besagten Rippen (36) der zweiten Seite des besagten mindestens einen Einsatzes (17) mit dem Abstand (Y) der beiden sich gegenüberliegenden Ränder der besagten Öffnung (16) der besagten Wasserströmungsleitwand (15) zusammenwirkt.

10. Mehrwegeventil (14) nach Anspruch 9, **dadurch gekennzeichnet, dass** die besagten sich gegenüberliegenden ersten Ränder und die besagten sich gegenüberliegenden zweiten Ränder der besagten Öffnung (16) einer der besagten Wasserströmungsleitwände (15) in zwei parallelen Ebenen angeordnet sind, wobei der Abstand zwischen den besagten zwei parallelen Ebenen größer als die oder gleich der Dicke (t) des besagten mindestens einen Einsatzes (17) ist.

11. Waschmaschine (1), insbesondere eine Waschmaschine für Wäsche oder eine Waschmaschine für Geschirr, **dadurch gekennzeichnet, dass** die besagte Waschmaschine (1) einen Wasserbehälter (6) und ein Mehrwegeventil (14) gemäß einem beliebigen der Ansprüche 1 bis 10 umfasst.

## Claims

1. A multichannel valve (14) comprising :
- a body (34), said body (34) comprising water flow channelling walls (15) so as to form chambers within said body (34);
- water passage openings (31, 32, 33, 41) so as to allow water to flow from the outside to the inside of said valve (14), and vice versa;
- water flow passages (38a, 38b, 39, 40a, 40b) built within said body (34) so as to allow water to flow between said chambers of said body (34); and
- check valves (28, 29, 30) obstructing or clearing said water flow passages (38a, 38b, 39, 40a, 40b) so as to orient water flows inside said body (34);
**characterized in that** at least one of said water flow channelling walls (15) of said body (34) comprises an opening (16) within which an insert (17) is disposed, said at least one insert (17) comprises one of said water flow passages (38a, 39, 40a, 40b).

2. A multichannel valve (14) according to claim 1, **characterized in that** said check valves (28, 29, 30) respectively comprise at least one seal (18), wherein a seal (18) of one of said check valves (28, 29, 30) mates with said insert (17) of at least one of said water flow channelling walls (15) so as to obstruct a water flow passage (38a, 39, 40a, 40b) built into said insert (17).

3. A multichannel valve (14) according to claim 2, **characterized in that** said seal (18) surrounds a section above the section of said water flow passage (38a, 39, 40a, 40b) to be obstructed by one of said check valves (28, 29, 30), said water flow passage (38a, 39, 40a, 40b) being built into said insert (17) of said water flow channelling wall (15).

4. A multichannel valve (14) according to any one of the claims 1 to 3, **characterized in that** said insert (17) comprises a wall (21) in which one of said water flow passages (38a, 39, 40a, 40b) is built, wherein said wall (21) has a bulge (19) respectively extending along a first edge and a second edge of said wall (21), said first edge being opposite said second edge of said wall (21), and said bulge (19) of said first and second edges of said wall (21) mates with a groove (20) of said opening (16) built into one of said water flow channelling walls (15).

5. A multichannel valve (14) according to claim 4, **characterized in that** said bulge (19) of said first and second edges of said wall (21) being cylindrical in shape has a diameter greater than the width of said groove (20) of said opening (16) built into one of said water flow channelling walls (15).

6. A multichannel valve (14) according to one of the claims 1 to 5, **characterized in that** the height (w) of said at least one insert (17) is determined based on said opening (16) built into one of said water flow channelling walls (15) so as to align an upper edge (22) of said at least one insert (17) with an upper edge (23) of said water flow channelling wall (15).

7. A multichannel valve (14) according to claim 6, **characterized in that** said valve (14) also comprises a lid (35), wherein a seal (24) is disposed on said upper edge (23) of said water flow channelling walls (15) of said body (34) and on said upper edge (22) of said at least one insert (17), and wherein said seal (24) is held in position by the fastening of said lid (35) on said body (34) by means of fastening elements (25).

8. A multichannel valve (14) according to any one of the claims 1 to 7, **characterized in that** said at least one insert (17) respectively comprises on a first face and a second face a positioning device (26, 36) mating with opposite edges of said opening (16) of one of said water flow channelling walls (15).

9. A multichannel valve (14) according to claim 8, **characterized in that** said positioning device (26, 36) respectively built on the first face and second face of said at least one insert (17) respectively comprises at least two ribs (26, 36) respectively disposed on either side of said water flow passage (38a, 39, 40a, 40b), wherein the space (x) between said ribs (26) of the first face of said at least one insert (17) mates with the space (X) of two first opposite edges of said opening (16) of one of said water flow channelling walls (15), and wherein the space (y) between said ribs (36) of the second face of said at least one insert (17) mates with the space (Y) of two second opposite edges of said opening (16) of said water flow channelling wall (15).

10. A multichannel valve (14) according to claim 9, **characterized in that** said first opposite edges and said second opposite edges of said opening (16) of one of said water flow channelling walls (15) are disposed in two parallel planes, wherein said two parallel planes are separated by a space greater than or equal to the thickness (t) of said at least one insert (17).

11. A washing machine (1), in particular a laundry washing machine or a dishwasher, **characterized in that** said washing machine (1) comprises a water reservoir (6) and a multichannel valve (14) according to any one of the claims 1 to 10.
